# EUROPEAN PATENT APPLICATION

(11) **EP 4 629 117 A1**
(43) Date of publication of application: **08.10.2025**
(21) Application number: 25167521.1
(22) Date of filing: 31.03.2025
(51) Int. Cl.: G06F 21/60, H04L 9/40, H04W 12/10, H04W 12/106, H04W 84/12

(54) **UHR BEACON AND INTEGRITY PROTECTION**

(30) Priority: 05.04.2024 US 202463575364 P
(71) Applicant: Apple Inc., Cupertino, CA 95014 (US)
(72) Inventor: HEDAYAT, Ahmad Reza, Cupertino, California, 95014 (US); LIU, Yong, Cupertino, California, 95014 (US); KNECKT, Jarkko L., Cupertino, California, 95014 (US); BOODANNAVAR, Veerendra, Cupertino, California, 95014 (US); DOMINGUEZ, Charles F., Cupertino, California, 95014 (US); SUN, Yanjun, Cupertino, California, 95014 (US); SEOK, Yong Ho, Cupertino, California, 95014 (US)
(74) Representative: Simmons & Simmons

(57) **Abstract**

Described herein are methods, systems and apparatuses for enhancing beacon frame integrity protection. In some embodiments an access point (AP) may generate a beacon frame comprising an early termination management message integrity check (MIC) element (ET MME) and a standard MME. The ET MME may provide integrity protection for one or more initial elements in the beacon frame. The ET MME may be positioned before the standard MME.

## Description

### TECHNICAL FIELD

This application relates generally to wireless communication systems, including management message integrity check (MIC) element (MME) for beacon frames.

### BACKGROUND

Wireless communication technology uses various standards and protocols to transmit data between an access point and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

In the 802.11 standard for WLAN, an access point (AP) is a device that creates a wireless local area network (WLAN), or Wi-Fi^{®} network. It may be connected to a wired network, such as an Ethernet network, and provides wireless access to that network for other devices. A station is a device that is capable of being wirelessly connected to the AP to join the WLAN network. Stations can be laptops, smartphones, tablets, or any other device with a WLAN adapter.

APs and stations communicate with each other using the Wi-Fi^{®} protocol. Various protocols have been established to increase security over a wireless communication network. For example, Simultaneous Authentication of Equals is the core authentication protocol of WPA3-Personal, and is mandated to be supported by all Wi-Fi^{®} Alliance certified devices, including both access points (APs) and non-AP stations (STAs).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example of a beacon frame in accordance with some embodiments.
FIG. 2 illustrates an example transmission flow diagram of a potential attack on a beacon frame in accordance with some embodiments.
FIG. 3 illustrates an example beacon frame with an early termination management message integrity check (MIC) element (MME) in accordance with some embodiments.
FIG. 4 illustrates an example structure for the early termination (ET) MME in accordance with some embodiments.
FIG. 5 illustrates an example capability info field in accordance with some embomints.
FIG. 6 illustrates an example beacon frame with MAC header protection (MHP) in accordance with some embodiments.
FIG. 7 illustrates an example of a group-addressed management frame with a separate MHR MIC and a frame payload MME in accordance with some embodiments.
FIG. 8 illustrates an example MHP MIC element in accordance with some embodiments.
FIG. 9 illustrates an example timeline with a series of beacon signal transmissions in accordance with some embodiments.
FIG. 10 illustrates an example beacon frame in which an additional field in the ET MME carries an indication of BSS parameter change for one or more links of the access point (AP) multi-link device (MLD) and an indication of the same of other Basic Service Set Identifiers (BSSIDs) in accordance with some embodiments.
FIG. 11 illustrates an example of BSS parameter change notification in ET MME in accordance with some embodiments
FIG. 12 illustrates an example of a beacon frame where the SSID is repositioned in accordance with some embodiments.
FIG. 13 illustrates an aspect of the subject matter in accordance with one embodiment.
FIG. 14 illustrates an aspect of the subject matter in accordance with one embodiment.
FIG. 15 illustrates an aspect of the subject matter in accordance with one embodiment.
FIG. 16 illustrates an aspect of the subject matter in accordance with one embodiment.
FIG. 17 illustrates an aspect of the subject matter in accordance with one embodiment.
FIG. 18 illustrates an example beacon frame where the timestamp field is masked out of beacon integrity protection in accordance with some embodiments.
FIG. 19 illustrates an example of a fake beacon that an attacker may send in place of a legitimate beacon in accordance with some embodiments.
FIG. 20 illustrates an example timeline where an attacker has modified the timestamp field in accordance with some embodiments.
FIG. 21 illustrates an example timeline for transmission of a beacon in accordance with some embodiments.
FIG. 22 illustrates an example beacon frame with a timestamp field is integrity protected by an ET MME in accordance with some embodiments
FIG. 23 illustrates an example beacon frame where the timestamp field is integrity protected by the ET MME by masking out several least significant bits of the timestamp value from the ET MME in accordance with some embodiments.
FIG. 24 illustrates an example timeline in which the ET MME calculation is redone in accordance with some embodiments.
FIG. 25 illustrates a high level example beacon transmission timeline under 802.11 in accordance with some embodiments.
FIG. 26A illustrates an example beacon transmission timeline that uses a discovery beacon and an associated beacon.
FIG. 26B illustrates an example format of the associated beacon in accordance with some embodiments.
FIG. 27 illustrates an example of various fields that can be included in a beacon frame.
FIG. 28 illustrates an example method performed by an AP in accordance with some embodiments.
FIG. 29 illustrates an example method performed by a station (STA) in accordance with some embodiments.
FIG. 30 illustrates a method performed by an AP in accordance with some embodiments.
FIG. 31 illustrates an example system for performing signaling between a wireless device and a network device, according to embodiments disclosed herein.

### DETAILED DESCRIPTION

Wireless communication technology uses various standards and protocols to transmit data between an access point and a wireless communication device. One standard that is used for wireless communication is Institute of Electrical and Electronics Engineers (IEEE) 802.11 standard for Wireless Local Area Networks (WLAN) (commonly known to industry groups as Wi-Fi^{®}). Wi-Fi^{®} provides a convenient way to establish a network between devices. A device (e.g., a station) may connect to a Wi-Fi^{®} access point to join a network and connect to the internet wirelessly. Wi-Fi^{®} security is important to protect data and devices from unauthorized access.

Various embodiments are described with regard to a station (STA) and Access Point (AP). However, reference to a STA and AP is merely provided for illustrative purposes. The example embodiments may be utilized with any electronic component that may establish a connection to a network and is configured with the hardware, software, and/or firmware to exchange information and data with the network. Therefore, the STAs and APs as described herein are used to represent any appropriate electronic component.

The next generation of Wi-Fi, known as Ultra-High Reliability (UHR) Wi-Fi, represents a significant advancement in wireless communication technology. UHR Wi-Fi is specifically engineered to deliver unparalleled levels of dependability, robustness, and fault tolerance in wireless networking, setting a new standard for reliability in the realm of Wi-Fi connectivity. UHR Wi-Fi is designed to provide ultra-reliable wireless communication, offering enhanced performance and resilience to meet the stringent reliability requirements of various applications and use cases.

A Beacon frame in UHR Wi-Fi is a type of management frame that is periodically transmitted by an access point to announce its presence and provide important network information to nearby client devices. This information may include the network's SSID (Service Set Identifier), supported data rates, security parameters, and other configuration details. The Beacon frame plays a role in helping client devices discover and connect to Wi-Fi networks, as it provides information for devices to determine whether the network is within range and if it meets their connectivity requirements. Furthermore, the Beacon frame allows devices to synchronize with the access point's timing and channel, facilitating efficient and seamless communication within the wireless network.

The frequent transmission of Beacon frames is inherent to the standard operation of Wi-Fi networks, ensuring that client devices receive updated network information and can maintain synchronization with the access point. However, the repetitive nature of Beacon frame transmissions can lead to potential inefficiencies, especially in scenarios where client devices remain within range of the access point and receive numerous Beacon frames, consuming unnecessary network bandwidth and power. To address this issue, the concept of early termination was introduced to optimize Beacon frame transmission in Wi-Fi networks.

Early termination allows client devices to intelligently monitor and assess the Beacon frames being transmitted by access points, enabling them to make informed decisions about when to terminate the reception process based on predetermined criteria. By implementing early termination mechanisms, client devices can selectively disregard the reception of subsequent Beacon frames under specific circumstances, such as when the network parameters remain unchanged or when the device's synchronization requirements are already met. This approach helps conserve network resources, reduce unnecessary channel contention, and minimize power consumption in client devices, contributing to overall network efficiency and improved performance.

However, early termination of the Beacon frame has an effect on the integrity protection of the Beacon frame. For instance, because of the early termination integrity protection fields may be dropped. Some embodiments herein describe improvements to the integrity protection of a Beacon frame. For instance, some embodiments include Beacon integrity protection for early terminated Beacon frames.

Further, there may be no timestamp integrity protection for a Beacon frame. Because of this, the timestamp of the Beacon frame may be vulnerable to attacks when early termination applies. Some embodiments herein include enhanced timestamp integrity protection in the Beacon frame.

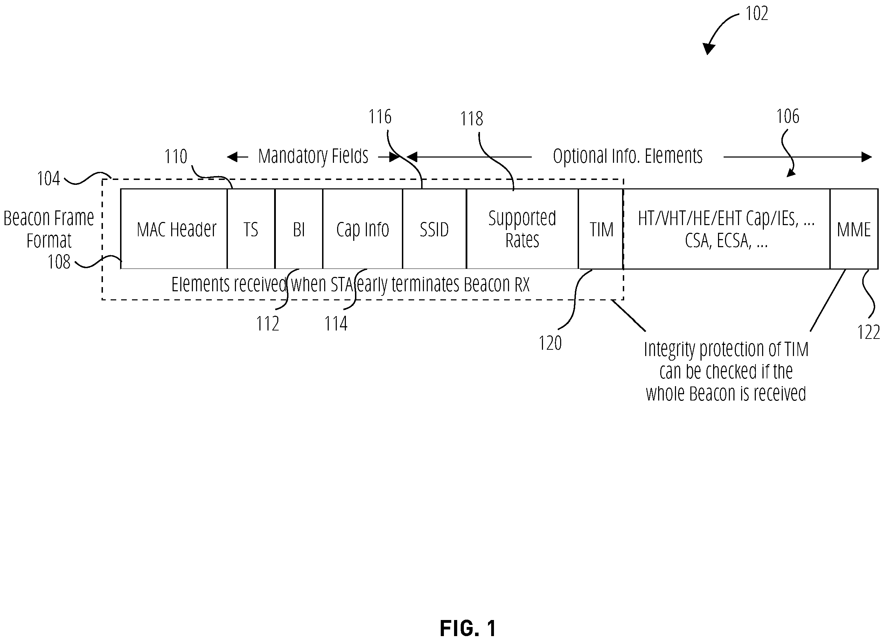

FIG. 1 illustrates an example of a Beacon frame 102 in accordance with some embodiments. As shown, the Beacon frame 102 includes a number of elements 104 that are received by a STA even when STA terminates reception of the Beacon frame 102 early. The additional information elements 106 following the elements 104 are dropped by the STA when early termination applies to conserve power.

As shown, the elements 104 received before a STA applies early termination may include a Media Access Control (MAC) header 108, a timestamp field 110, a Beacon interval (BI) field 112, a capability information (capability info) field 114, a Service Set Identifier (SSID) field 116, a supported rates field 118, and a Traffic Indication Map (TIM) element 120. The MAC header 108 includes control and addressing information. The timestamp field 110 conveys time information related to the transmission of the Beacon frame 102. The BI field 112 may provide the time interval between successive Beacon transmissions by the AP. The capability info field 114 may include details about the capabilities and supported features of the AP. The supported rates field 118 may indicate data rates supported by the AP or basic service set (BSS).

The additional information elements 106 may include a number of various fields (e.g., HT/VHT/HE/EHT Cap/IEs, CSA, ECSA, etc.). The additional information elements 106 may include a management message integrity check (MIC) element (MME) 122. The MME 122 may be used for integrity protection of other fields including TIM element 120 if the whole Beacon frame 102 is received by a STA.

The Beacon frame 102 includes three mandatory fields (e.g., timestamp field 110, BI field 112, and capability info field 114), and many optional elements. The Beacon frame size could be 200-500+ bytes, because of the numerous optional IEs. Among the optional elements, an associated STA is interested in the TIM element 120, to check if there is any pending downlink data.

Power saving during Beacon reception may be important. Power saving may be accomplished using Beacon Early Termination (BET). A STA using BET can stop Beacon reception after the TIM element to reduce STA receive (RX) power consumption. However, the integrity of the Beacon frame 102 is protected by a MIC that appears as the last IE (e.g., MME 122) in Beacon frame 102. A STA using the illustrated Beacon frame 102 has to receive the complete Beacon frame 102 to verify the integrity protection. Whenever an associated STA ignores Beacon integrity protection (due to BET), there is a chance that some of the fields (particularly the timestamp field 110, BI field 112, capability info field 114, and TIM element 120) are modified by an attacker, and being used by the STA without noticing.

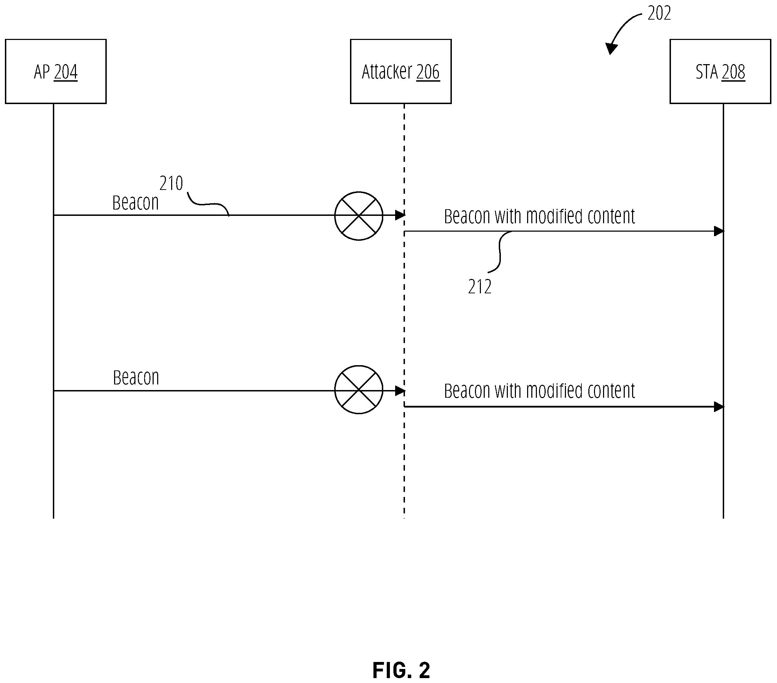

FIG. 2 illustrates an example transmission flow diagram 202 of a potential attack on a Beacon frame in accordance with some embodiments. As shown, the AP 204 may transmit a Beacon frame 210. The attacker 206 may disrupt the Beacon frame 210 delivery. For example, the attacker 206 may jam the signal by transmitting at a higher power. The attacker 206 may transmit a Beacon 212 with modified content to the STA 208.

There are attacks that pretend that the AP 204 has changed capabilities/operation. For example, the attacker 206 may change Enhanced Distributed Channel Access (EDCA) parameters. The attacker 206 may lower transmit power or instruct STAs to switch to another channel (e.g., in Channel Switch Announcement (CSA)/Extended Channel Switch Announcement (ECSA)).

Assuming the basic service set (BSS) supports Beacon integrity protection, an associated STA 208 can stay safe by verifying the MIC/MME. However, if the STA 208 implements Beacon early termination the STA 208 may not process the MME. If the Beacon frame 210 is formatted as shown in FIG. 1, the STA 208 cannot benefit from the integrity protection of MME and implement Beacon early termination

There are various attacks that the attacker 206 may implement to disrupt data delivery. For example, the attacker 206 could change the TIM content for some/all STAs, causing data loss. While the TIM IE is actually protected by the Beacon MIC/MME, if Beacon early termination is employed the protection is sacrificed. For instance, a Man-in-the-Middle attacker (e.g., attacker 206) that is closer to the STA 208 than the AP 204 can send a fake Beacon frame at about the same time as the legitimate Beacon frame and modify the TIM so that the Beacon frame indicates no pending data (empty TIM). Noticing an empty TIM, a STA 208 may perform Beacon early termination and ignore the remaining information elements (IEs), without checking the integrity of the Beacon in the MME field. This can lead to loss of downlink if repeated multiple times.

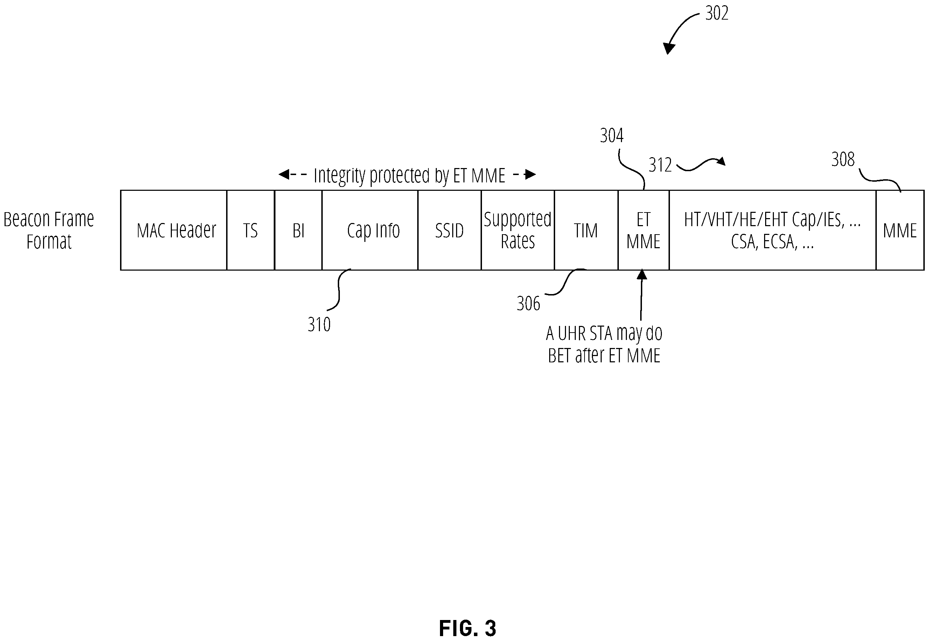

FIG. 3 illustrates an example Beacon frame 302 with an early termination MME (ET MME 304) in accordance with some embodiments. In some embodiments the ET MME 304 may be added to the Beacon frame 302 to integrity protect the early part of the Beacon frame 102. The ET MME 304 may include a MIC checksum of the information elements from the beginning of Beacon payload up to and including the TIM element 306.

STAs behaving under the 11bn/UHR STA standards may use the ET MME 304 for integrity protection for Beacon early termination. For example, an 11bn STA may get integrity protection of the elements from the beginning of Beacon payload up to and including the TIM element 306 using the ET MME 304. The STA may receive and process the beginning of the Beacon frame 302 up to the ET MME 304. The STA may check the fields (e.g., BI field capability info field, SSID field, and TIM element 306) that are integrity protected by the ET MME 304, and verify that they have not been modified. The ET MME 304 may allow the STA to identify a modified Beacon frame 302. The STA may continue parsing the remaining fields. The STA perform Beacon early termination after ET MME 304 and stop processing the remaining fields if early termination criteria is met or if an attack/change is identified.

Legacy STAs may not recognize the new added ET MME 304. A legacy STA may ignore the ET MME 304. The legacy STAs are capable of receiving elements in revised order, so they should be able to receive the Beacon frames 302 ignore the ET MME 304 and identify the fields and information elements relevant to a legacy STA.

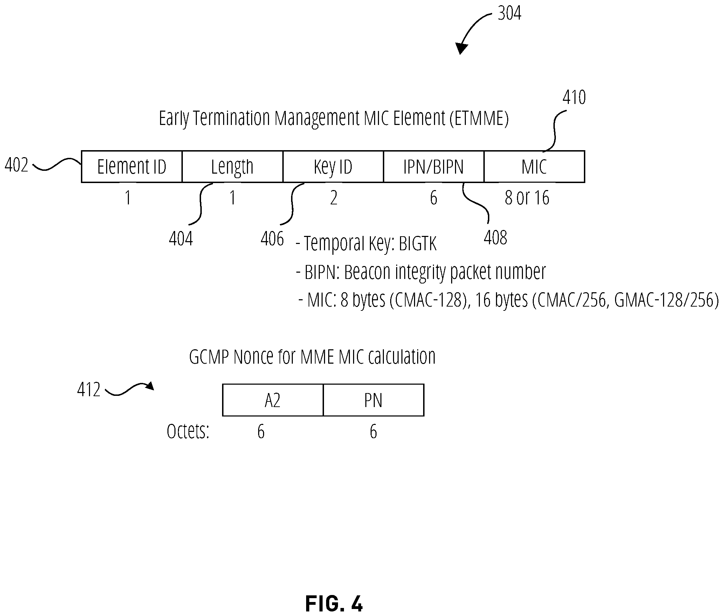

FIG. 4 illustrates an example structure for the ET MME 304 in accordance with some embodiments. The ET MME 304 may include specific fields that contribute to validating the integrity and authenticity of the beginning fields of the Beacon frame. In some embodiments, the ET MME 304 may use the same structure as the original MME of the Beacon frame, except the MIC may be calculated differently for ET MME 304.

As shown, the ET MME 304 may include an element ID 402, a length field 404, a key ID 406, a packet number/Beacon integrity packet number (IPN/BIPN 408), and a MIC 410. The element ID 402 is a field used to identify the type of information element within the management frame. It specifies the specific type or category of the information element, distinguishing it from other elements present in the frame. The Length field 404 indicates the size or length of the ET MME 304, specifying the amount of data or payload contained within the element. This field enables the recipient to accurately process and interpret the element's content. The key ID 406 is a field that may reference the specific cryptographic key associated with the MIC computation and validation process. This identifier ensures that the correct key is used to perform the Message Integrity Check, helping to verify the integrity of the management frame. The IPN/BIPN 408 is a field that may be used to provide sequence or packet number information required for cryptographic processing to validate the integrity of the management frame. The MIC 410 is a field that may include the result of the cryptographic process, such as a hash or message authentication code, generated using the specified key and the content of the management frame. The MIC 410 serves as the integrity check value that is transmitted within the frame and used to verify the frame's integrity upon receipt.

In some embodiments, the temporal key (e.g., identified by key ID 406) for the ET MME 304 may be Beacon integrity group temporal key (BIGTK). The BIPN (e.g., IPN/BIPN 408) may be the Beacon integrity packet number. The MIC 410 may be 8 bytes (CMAC-128) or 16 bytes (CMAC/256, GMAC-128/256).

The MIC 410 of ET MME 304 may be calculated with the following settings. The settings may include the key, the packet number, and nonce 412. For the key, the STA may use BIGTK (same key as the original MME field). The packet number may be signaled in Beacon Integrity Packet Number (BIPN) (e.g., IPN/BIPN 408), and may be the same value for ET MME 304 and MME. The nonce 412 in ET MME 304 MIC calculation is different than the nonce used in the original MME at the end of the Beacon frame.

Nonce 412 includes a transmitter address (A2) and packet number (PN). In some embodiments, the nonce 412 used for the ET MME 304 is different than the nonce used for the original MME of the Beacon frame. Either one or both of the A2 and the PN of the nonce 412 of the ET MME 304 may be altered to differentiate the nonce 412 from the nonce of the original MME. For example, in some embodiments, the transmitter address (A2) has group/individual bit set to 1 to make nonce different from MME. The specification may define the ET MME 304 version of A2. In some embodiments, BIPN may be incremented and used for ET MME 304. In other words two BIPN may be used for each Beacon frame (one for ET MME 304 and one for MME (e.g., MME 308)). Note that a (legacy) STA would only check to make sure that the value from the received MME IPN/BIPN field is larger than the replay counter value for the BIGTK.

Returning to FIG. 3, the ET MME 304 of the Beacon frame 302 may also be used for BSS parameter change notifications. There are two ways that an AP can indicate changes in capabilities/operation IEs in the Beacon frame 302. For instance, the AP may indicate a change through a critical update flag and/or a BSS parameter change count (BPCC).

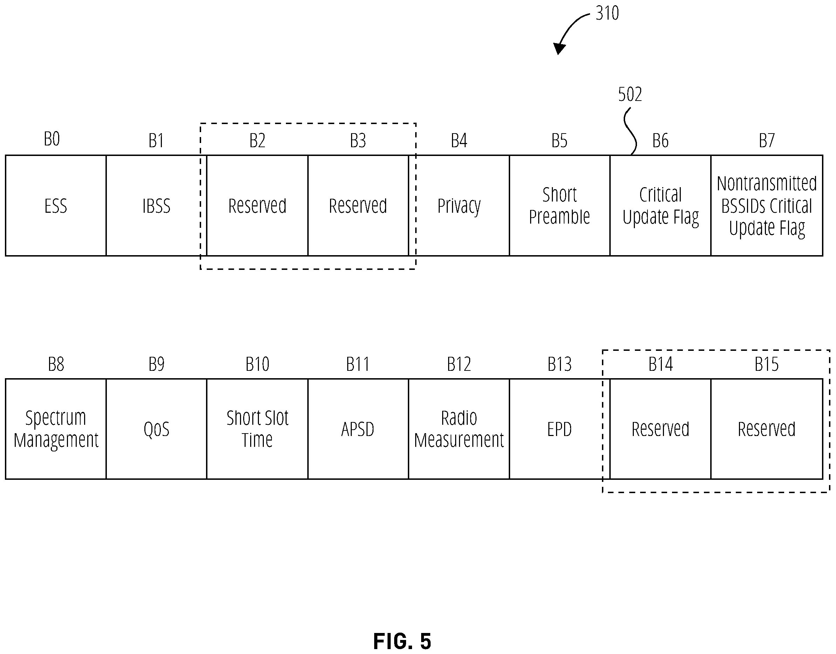

The critical update flag may be included in the capability info field 310. FIG. 5 illustrates an example capability info field 310 in accordance with some embodiments. As shown, the capability info field 310 may include a critical update flag 502. However, the critical update flag 502 only stays on for a Delivery Traffic Indication Message (DTIM) duration. In an embodiment, either of the reserved bits in FIG. 5 may be used to indicate the presence of a UHR or 11bn BSS, such indicating bit may be called "UHR BSS Indication" and may be either of B2, B3, B14 or B15.

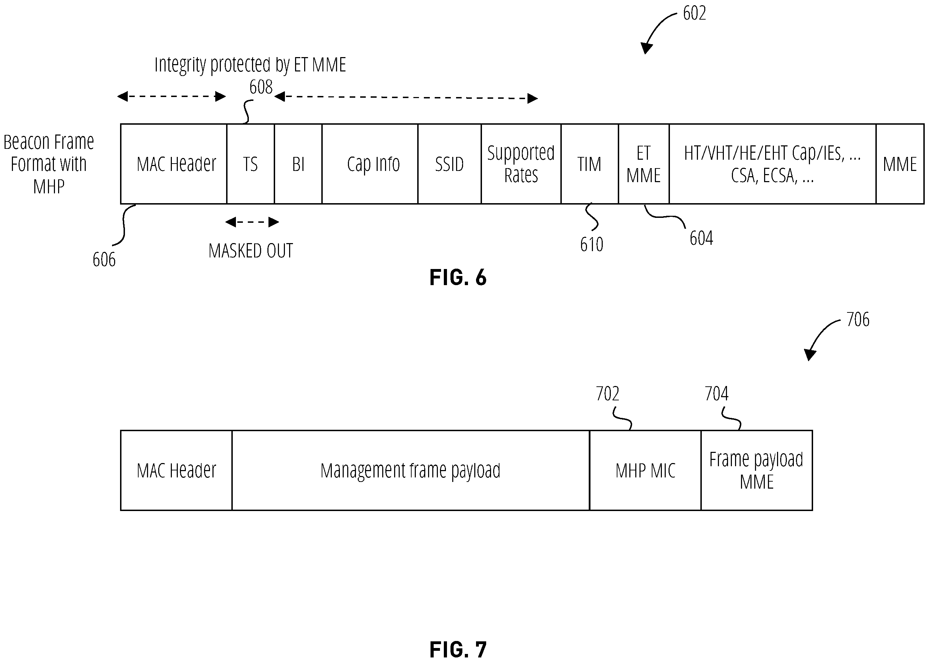

FIG. 6 illustrates an example Beacon frame 602 with MAC header protection (MHP) in accordance with some embodiments. MHP for data frames and individually addressed management frames may be used in some embodiments. MHP may be included in broadcast management frames, such as Beacon frames.

In some embodiments, ET MME 604 may extend to include the Beacon frame MAC header 606 (i.e., ET MME 604 may include MHP). For instance, in some embodiments the ET MME 604 may include the MAC header and the fields/IEs up to and including the TIM IE 610, but exclude the timestamp field 608. The details of ET MME 604 (key, PN) is the same as previously described.

The MHP of the Beacon frame alone may not be enough to avoid possible attacks. With MHP, it is possible that a receiving STA can verify the integrity of the MAC header of a received Beacon frame. However, a man in the middle attack may be used. For example, an attacker can replay (the MAC header and its MIC) and fake the TIM IE 610, leading to loss of DL data. Accordingly, other elements of the Beacon frame 602 may also be integrity protected by the ET MME 604. Further, the time to generate the ET MME MIC, e.g. in a soft-AP, may be about the same to generate the MIC for MAC Header protection.

In some embodiments, there may be a separate MHP and ET MME for group-addressed management frames. For group-addressed management frames in general, it is possible to take these approaches. In a first step, the AP may calculate the integrity protection of the MAC Header (of the group-addressed management frame). In a second step, the AP may calculate the MME of the payload (of the group-addressed management frame); same as the baseline. Note that in the second step, the content of the MHR MIC (may appear as the last IE before the MME and) may be included in the management frame MME. For instance, FIG. 7 illustrates an example of a group-addressed management frame 706 with a separate MHP MIC 702 and a frame payload MME 704 in accordance with some embodiments.

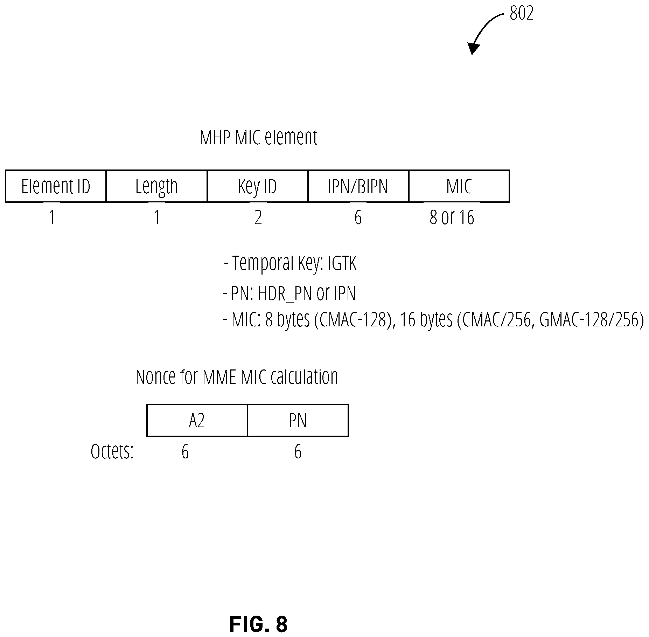

Further, FIG. 8 illustrates an example MHP MIC element 802 (e.g., MHP MIC 702 of FIG. 7) in accordance with some embodiments. As shown, the MAC Header MIC structure may be the same as the baseline MME, with following differences. The key may be IGTK which may be the same key used for group-addressed MMPDUs. The packet number may be HDR_PN or IPN (IGTK packet number, with TBD modifications in A2).

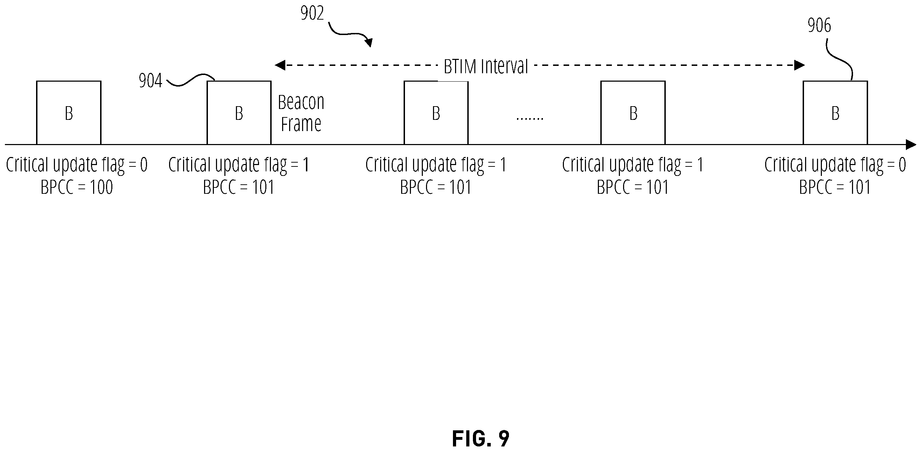

For example, FIG. 9 illustrates a timeline with a series of Beacon signal transmissions. As shown, during a second Beacon 904, a change occurs so the AP sets the critical update flag to one. The critical update flag stays set to one for the DTIM interval 902. On the Beacon 906 following the BTIM interval 902, the critical update flag reverts to zero.

There is a chance that one or more STAs will not receive a Beacon during the DTIM interval 902. For example, a STA may be in a power save mode, or may miss the Beacon frames due to in-device coexistence procedures. If the STA misses the Beacon frames during the DTIM interval 902, the STA may fail to identify that a change has occurred since the last received Beacon frame because the critical update flag reverted to zero. Accordingly, the STA may mistakenly perform Beacon early termination and not process the changes in the remaining information elements of the Beacon.

Another way to indicate a change is BPCC. BPCC may be more robust because instead of a single bit flag (e.g., critical update flag) BPCC may indicate changes using one octet in some embodiments. The BPCC can signal whether a BSS has updated a critical parameter. A critical parameter update may increase the BPCC value by 1. For instance, as shown in FIG. 9 the BPCC is increased from 100 to 101 for the second Beacon 904. The new BPCC value is maintained until another change occurs. If another change occurs, the value of BPCC will be increased again. The BPCC appears in Multilink element (MLE) as part of discovery info in Beacon frame and in Reduced Neighbor Report for affiliated APs of AP multi-link device (MLD). The MLE is part of 11be IEs which appears later in a Beacon frame after all HT/VHT/EHT capability IEs (e.g., information elements 312 of FIG. 3).

There are chances that a STA miss the BSS updates. When a STA misses multiple Beacon frames beyond a DTIM period (for reasons such as coexistence events), and the STA uses Beacon early termination, the STA may fail to observe the critical update flag and may overlook BPCC change. For example, because BPCC is in the information elements 312 that occurs at a point in the frame after the Beacon early termination occurs, the STA may not process the change in the BPCC. Further the STA may miss multiple Beacon frames beyond a DTIM period and therefore may not receive a Beacon with a critical update flag set to one.

Some embodiments herein may add an indication of per-link BSS parameter change count in a field that appears before TIM. In some embodiments, BPCC may carry the same BPCC value (that is carried in MLE) for each link. The STA may determine to receive the full Beacon if BPCC value is increased. For instance, ET MME 304 may include BPCC for affiliated APs.

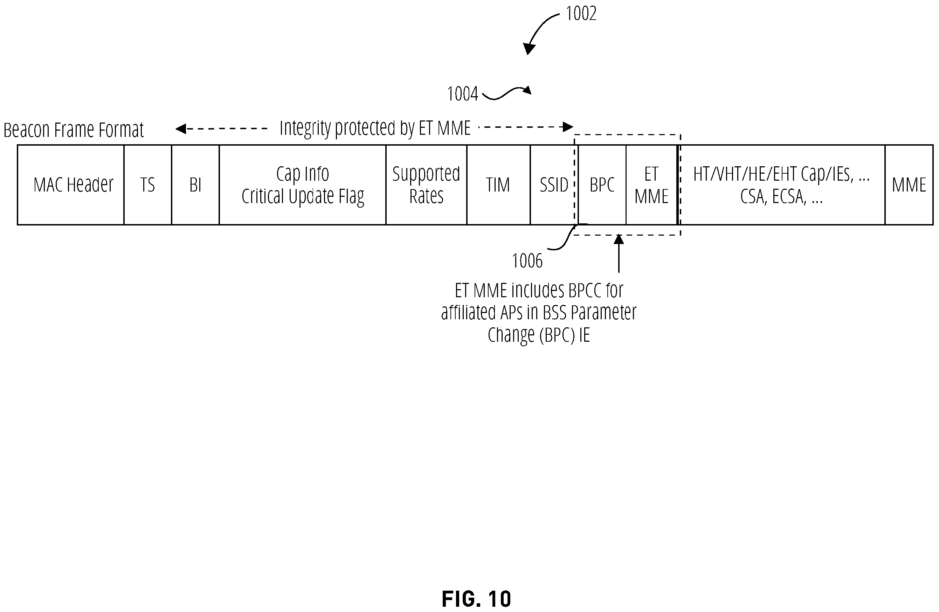

FIG. 10 illustrates an example Beacon frame 1002 in which an additional field in the ET MME 1004 carries an indication of BSS parameter change (BPC 1006) for one or more links of the AP MLD and an indication of the same of other Basic Service Set Identifiers (BSSIDs) in accordance with some embodiments. The BPC 1006 may indicate BSS parameter changes. As shown, in some embodiments, the BPC 1006 may be part of the ET MME 1004. In some embodiments, the BPC 1006 and the ET MME 1004 may be separate information elements. The BPC field may haves 8 or 16 bits, depending on the number of BPCCs. For some embodiments, the BPC field size may be 8 bits.

The BPC 1006 information element may include an element ID (1 octet), a length (1), {Link ID (1), BPC (1)} for each link. For instance, the BPC 1006 may be independent for each link of a multi-link device. There are multiple options for the value that is carried in BPC 1006 field. In some embodiment, it may be the same value as BPCC for each link. In some embodiments, the BPC 1006 may carry the same BPCC value (that is carried in MLE and RNR) for each link. The BPC 1006 may include a link ID and the respective BPCC.

The UHR STA may behave based on the BPC 1006. If the BPC 1006 value of at least one link is increased, the STA may continue parsing the remainder of the Beacon frame (and avoid Beacon early termination). Otherwise, if the BPC 1006 value does not increase on the links, the STA may perform Beacon early termination. Note that the value carried in BPC 1006 field remains the same or gets incremented in the subsequent Beacon frames. This is unlike Critical Update Flag which is represented by a single bit and remains 1 only during one DTIM interval (and resets to 0 afterwards).

The value(s) carried in BPC 1006 may be an indication for the receiving STA to continue receiving the whole Beacon if needed. Such indication remains the same or gets incremented in the subsequent Beacon frames (depending if one or more of BPCC have changed). Note that this is unlike Critical Update Flag which is represented by a single bit and remains 1 only during one DTIM interval (and resets to 0 afterwards). Hence, it is possible to carry such indications without the need to carry individual BPCC values.

One possibility is to add a single value for the BPCC fields of all the links (e.g. the sum of respective BPCC values) in the Beacon. The STA behavior may be the same where it would parse the rest of the Beacon frame (and avoid Beacon early termination) where it would find out which of the links has an incremented BPCC. Another possibility is to add a single value for all BPCC fields (e.g. the sum of respective BPCC values) in the Beacon. The STA behavior may be the same where it would parse the rest of the Beacon frame (and avoiding Beacon early termination) where it would find out which of the BSS have an incremented BPCC.

In some embodiments, the BPC 1006 information element may include an Element ID (1 octet), Length (1), and BPC (1, 2 or 3). The BPC field may be a single value that represents the "Sum of BPCC" fields per each link and per each BSSID (the same is modulo the length of the field). As long as all BPCC value remain the same, the BPC value is unchanged. Otherwise, the value of BPC is incremented, which indicates BSS parameters of one or more links has changed. In an example, a multi-BSSID (MBSSID) Beacon may include information for BSSID A: Link 1 and Link 2; and BSSID B: Link 1 and Link 2. Sum of BPCC may be carried in the BPC field, which is the sum of BPCC values over all BSSIDs and all links (module the size of the BPC field). For example, BPCC (A,1) + BPCC (A,2) + BPCC (B,1) + BPCC (B,2) where BPCC (A or B, 1 or 2) is the BPCC of respective BSSIDs.

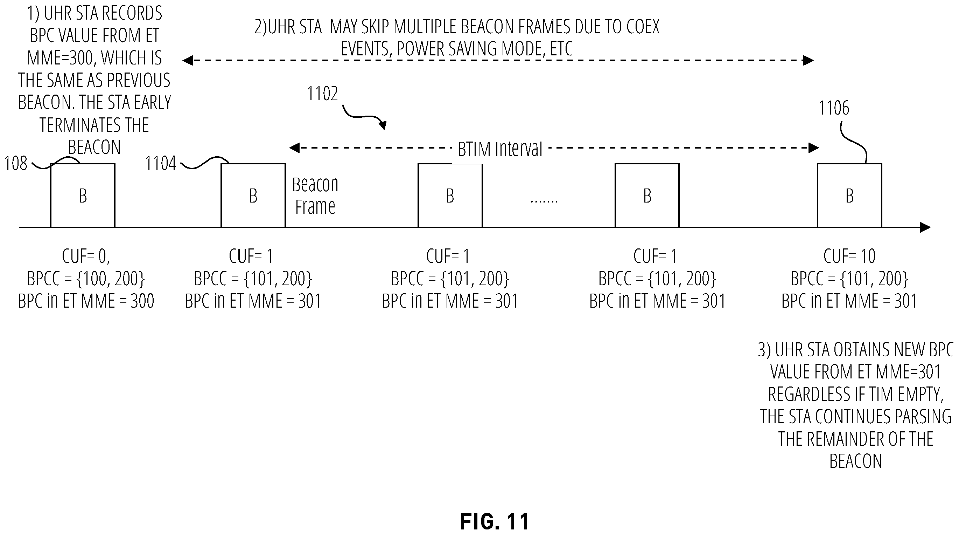

FIG. 11 illustrates an example of BSS parameter change notification in ET MME in accordance with some embodiments. As shown, the STA may receive a first Beacon 1108. The STA may store the value of the BPC field of the last received Beacon frame. In the illustrated embodiment, the STA records BPC value (that is carried in the ET MME), which is the same as previous Beacon. The STA early may terminate the Beacon early since the ET MME is the same as the previous Beacon.

The STA may receive the next Beacon or may have skipped multiple Beacon frames, possibly even beyond a DTIM interval 1102. The STA may skip multiple Beacon frames due to Coexistence events, power saving mode, etc. In the illustrated embodiment, the STA misses Beacon frames (e.g., Beacon 1104) where the Critical Update Flag is set to 1, the BPC is increased by one and the BPCC is increased by one.

Once the STA receives the next Beacon frame (e.g., Beacon 1106), the STA verifies the value of the BPC field. If the BPC value is the same, indicates no BSS (BSSID, link ID) has parameter change, the STA may store the sum of BPCC value and may perform Beacon early termination. If the BPC value is increased, the increase indicates that the BSS parameters of at least one of the BSS has changed. The STA continues parsing the remainder of the Beacon frame (and avoids Beacon early termination), and the STA receives the complete Beacon and learns the link and BSS specific BPCCs. The STA records the sum of BPCC and the new link specific BPCC values.

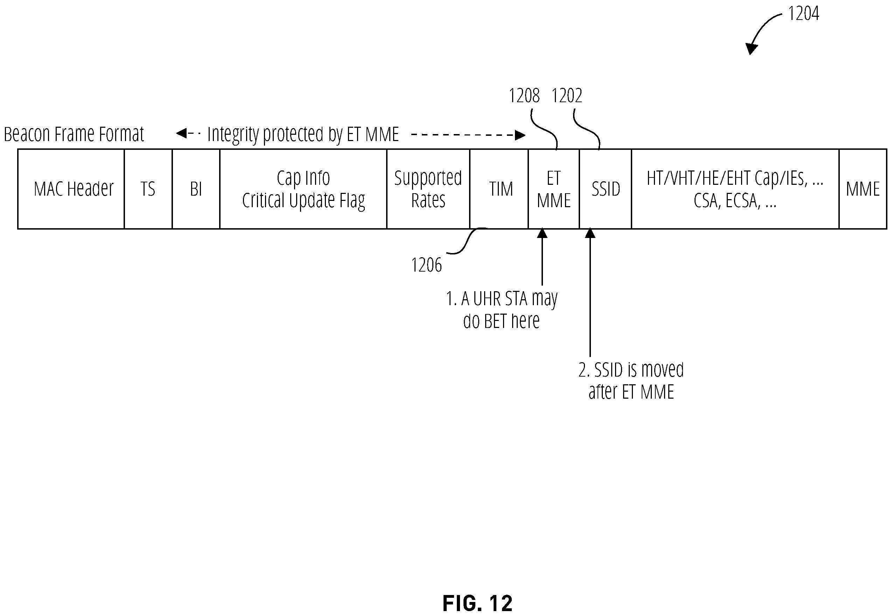

FIG. 12 illustrates an example of a Beacon frame 1204 where the SSID 1202 is repositioned in accordance with some embodiments. The SSID 1202 is an optional IE that typically appears before TIM IE 1206. The SSID 1202 could be up to 32 bytes (SSID IE ≤ 34 bytes). An associated STA does not need to parse the SSID 1202, therefore a reordering of SSID 1202 field may further help the power saving.

For example, in the illustrated embodiment, the SSID 1202 is moved after the TIM IE 1206, without changing in the information carried by the SSID 1202. Placing the SSID 1202 after the ET MME 1208 would allow the STA to do Beacon early termination before the SSID 1202 thereby reducing power used to process the SSID 1202.

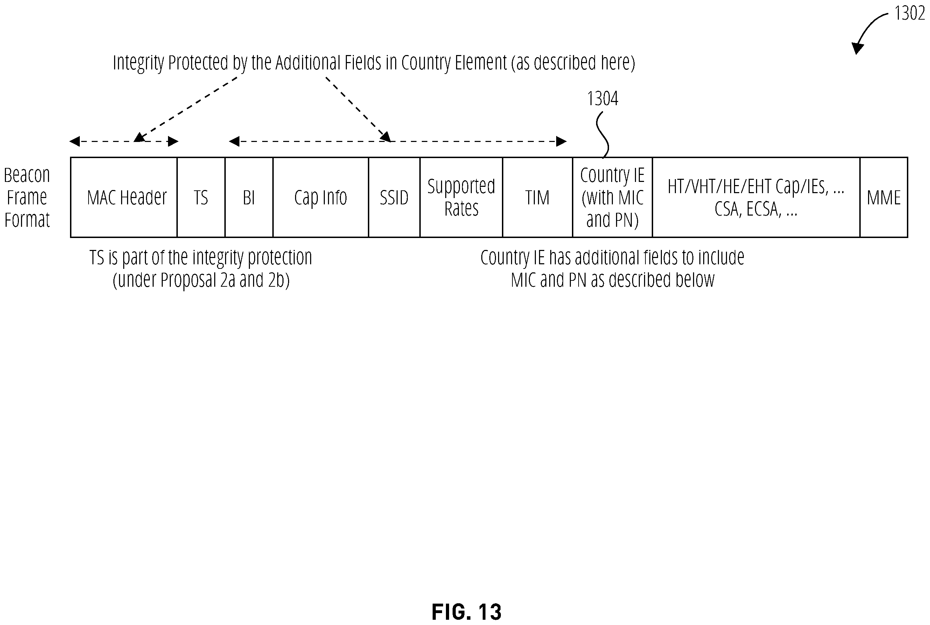

FIG. 13 illustrates an example Beacon frame 1302 with integrity protection for early-terminated legacy Beacon frame in accordance with some embodiments. Currently 802.11 specification defines an order of the elements in the Beacon frame. Some legacy STAs may not be capable of parsing the elements if the fields are in a different order then they are defined for the Beacon frame. To mitigate these STAs parsing failures, some of the fields of the ET MME information may be carried in the Country element 1304.

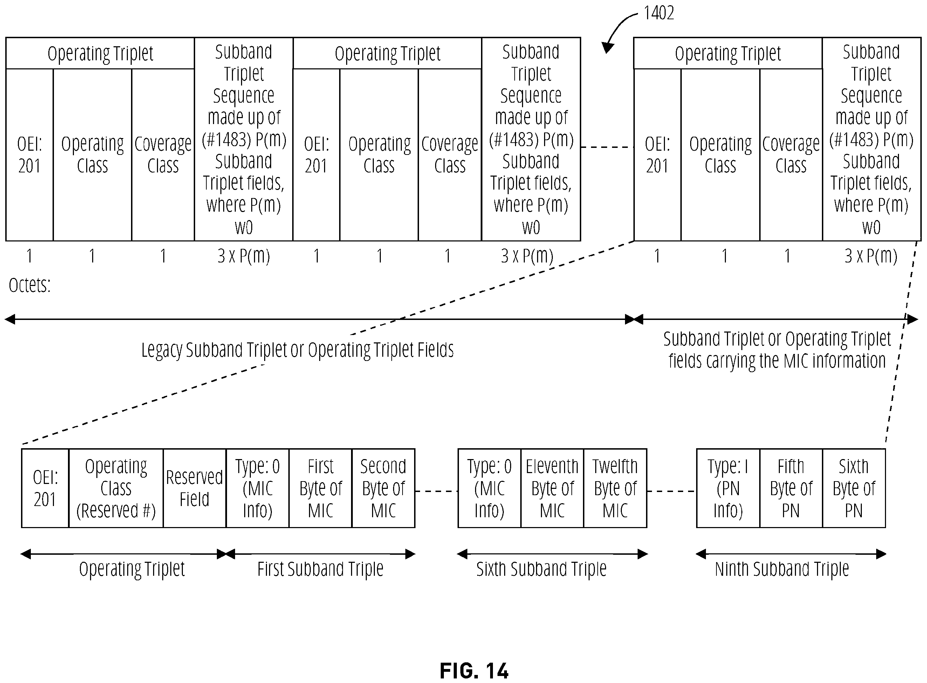

In some embodiments, the Country element 1304 carries the integrity protection as described in ET MME IE elsewhere herein. If dot1 1OperatingClassesRequired is true, then the Triplet field in the Country element 1304 may be composed of zero or more Subband Triplet fields followed by one or more Operating/Subband Sequence fields, as shown in Figure 9-226 of IEEE 802.11me D4.0 specification (*see,* FIG. 14; Triplet field format if dot1 10peratingClassRequired is true). If the Country element 1304 is included in a frame transmitted in the 6 GHz band, the Triplet field may be composed of zero Subband Triplet fields and only has one or more Operating/Subband Sequence fields.

When the Country element 1304 includes the MIC information for one or more fields of the Beacon frame body, it may be encoded in the Operating/Subband Sequence. In such case, the Operating Extension Identifier (OEI) subfield in the Operating Triplet field may be set to a value greater than 200 (e.g. 201) to indicate the start of the new Operating Triplet field. The Operating Class subfield in the Operating Triplet field may be set the reserved value to indicate the immediately following Subband Triplet fields represents the MIC information. Coverage Class field is reserved for the future extension. The following Subband Triple fields may have the MIC information and/or PN values. The first byte of the Subband Triple field may indicate the Subband Triplet type. If it is set to 0, the Subband Triple field may include the MIC information.

In some embodiments, there is no need to carry all the fields of the ET MME and it suffices that the Country element 1304 carries MIC, Key ID and PN. The STA may be aware that the "Key ID" is the same as the key ID of the MME, however in some implementations it may be required to have the Key ID as well. The PN may be carried in several Subband Triplets as shown in FIG. 14. FIG. 14 illustrates an example of a subband triplet or operating triplet fields 1402 in accordance with some embodiments. The MIC may be carried in several first Subband Triplets as shown in FIG. 14. Note that depending on cipher the MIC size may vary (e.g., MIC is 8 bytes if CMAC-128 and it is 16 bytes if CMAC/256, GMAC-128/256 ciphers are used). Note that in each Subbad Triplet the first octet may be an identifier and it may be MIC Info identifier or a PN Info identifier as shown in FIG. 14.

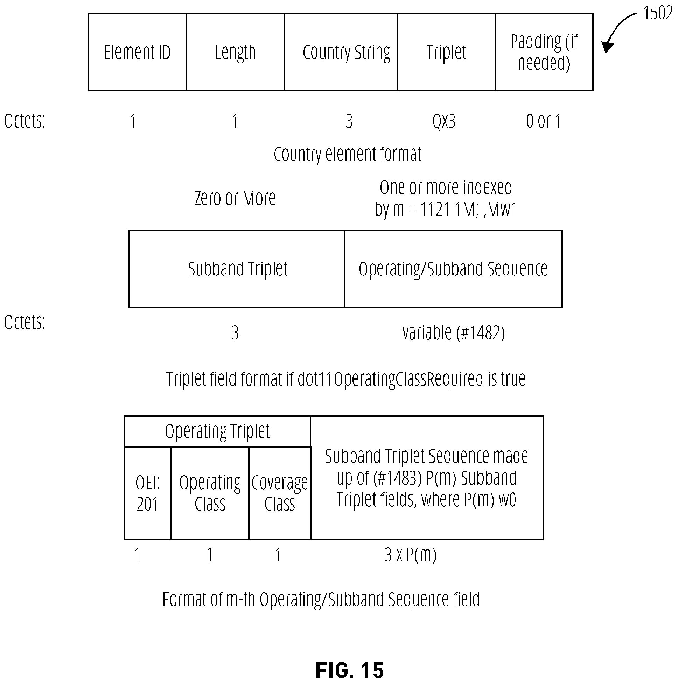

FIG. 15 illustrates an example country element 1502 in accordance with some embodiments. According to the IEEE 802.11 specification, the Country element 1502 includes the information to allow a STA to identify the regulatory domain in which the STA is located and to configure its physical layer (PHY) for operation in that regulatory domain. The format of the country element 1502 is as shown in FIG. 15.

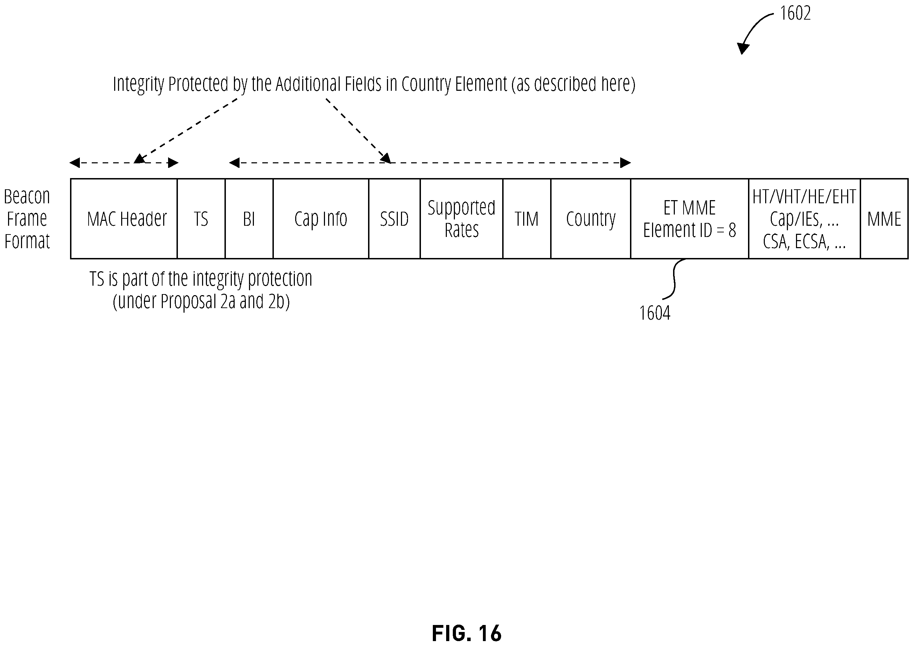

FIG. 16 illustrates another example Beacon frame 1302 with integrity protection for early-terminated legacy Beacon frame in accordance with some embodiments. Currently 802.11 specification defines an order of the elements in the Beacon frame. Some legacy STAs may not be capable of parsing the elements if the fields are in a different order then they are defined for the Beacon frame. To mitigate these STAs parsing failures, an ET MME 1604 may be carried in a new element with Element ID=8. Some STA implementation parse the elements in a received Beacon frame according to increasing Element ID.

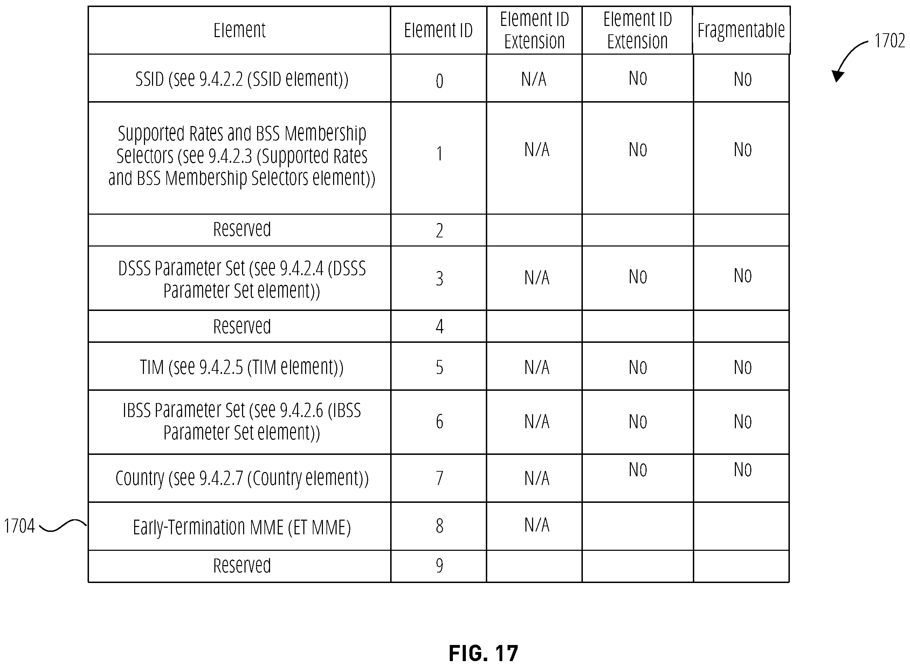

Note that based on the latest 802.11 spec (802.11me D5.0) the Element ID =8 is reserved. In the illustrated embodiment it is proposed to use Element ID =8 for ET MME 1604 IE. For example, FIG. 17 illustrates an example table 1702 of element IDs in accordance with some embodiments. As shown, ET MME 1704 corresponds with Element ID=8. Also shown in FIG. 17, Element ID=2 is reserved. In some embodiments the ET MME may have Element ID=2 and may appear after Supported Rates IE, where the ET MME provides the integrity protection for all the fields and elements that appear before it or it may also include the integrity protection for the TIM IE as well.

Returning to FIG. 16, the ET MME 1604 information element as shown may provide integrity protection for some or all the fields and information elements that appear prior to ET MME 1604. In some embodiments, the ET MME 1604 may provide integrity protection for all the fields and IEs including MAC Header but it masks out the TS field. Depending on implementation, the Country element may also be included in the integrity protection calculation.

In some embodiments, the ET MME 1604 may provide integrity protection for all the fields and IEs including MAC Header and including the TS field. Depending on implementation, the Country element may also be included in the integrity protection calculation.

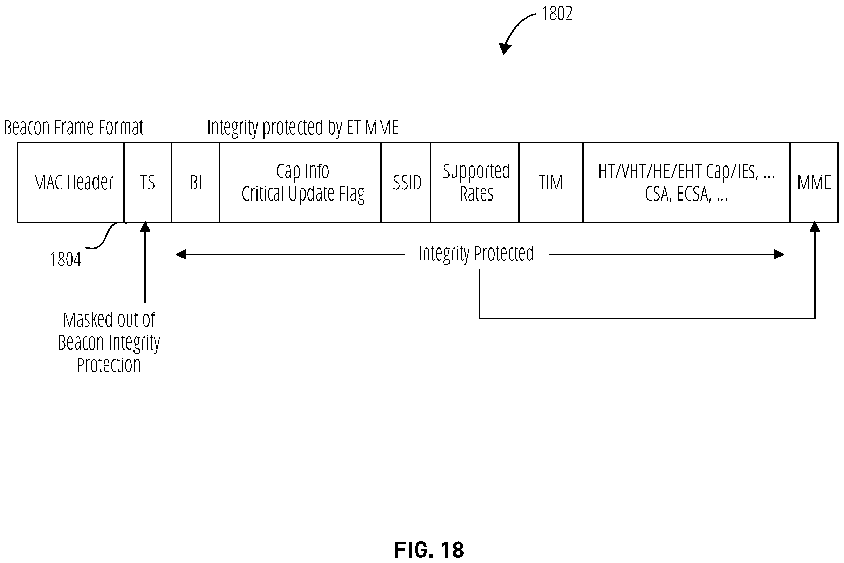

As previously discussed with reference to FIG. 2 Beacon early termination may leave a STA open to an attacker. FIG. 18 illustrates an example Beacon frame 1802 where the timestamp field 1804 is masked out of Beacon integrity protection. Currently, the timestamp field 1804 field is not protected by Beacon integrity protection.

Without timestamp integrity protection an attacker can replay the Beacon frame with modified timestamp value. For instance, an attacker can gradually drift the Target Beacon Transmission Time (TBTT) by modifying the timestamp field. By injecting a modified timestamp field, the attacker can cause the STAs to wake up for Beacon frame at times other than TBTT. The timestamp role is becoming even more important in next-generation WiFi. For example, 802.11bn has proposals to use the timestamp in MAC header replay and integrity protection, and 802.11bi has proposals to use the timestamp to schedule MAC header obfuscation for STAs.

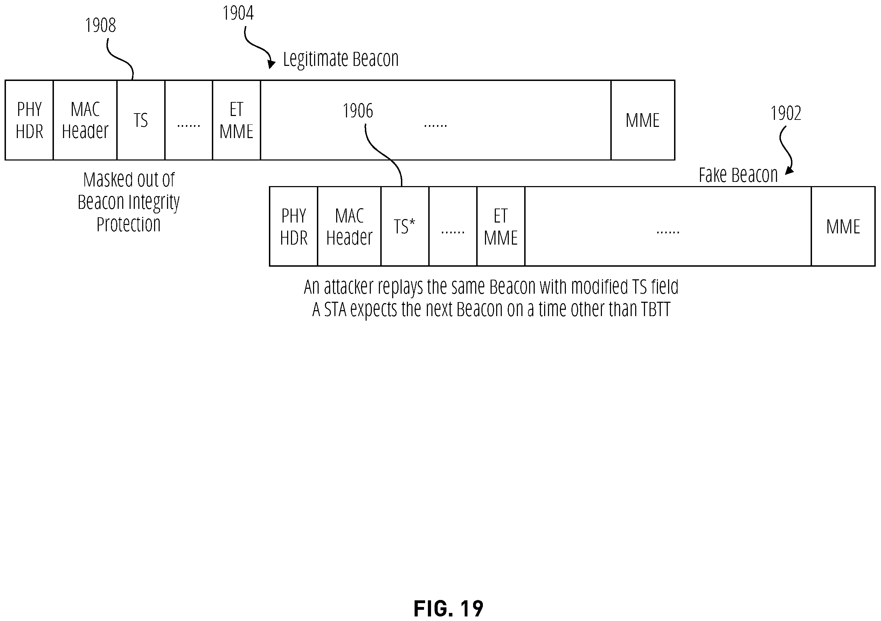

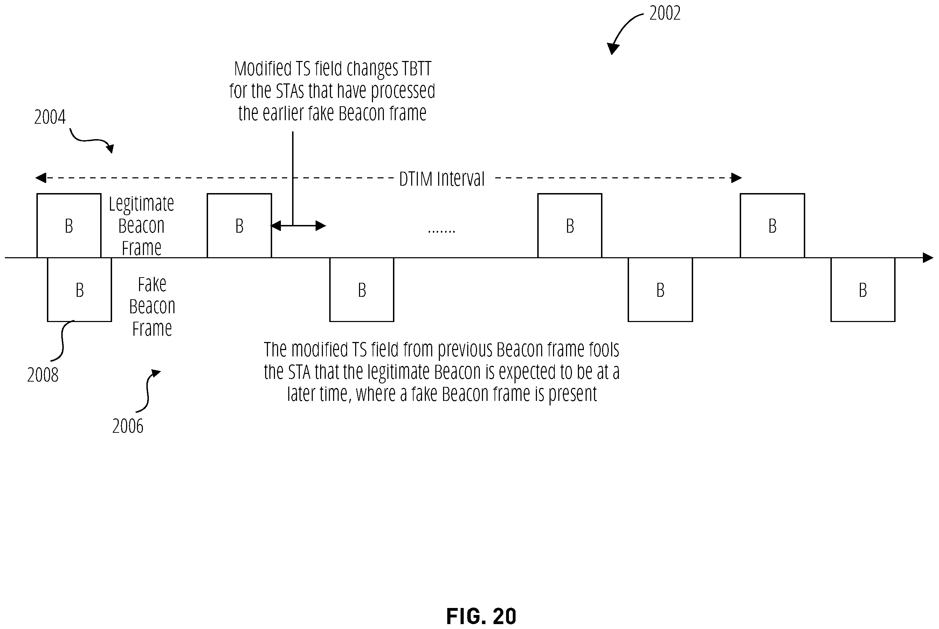

FIG. 19 and FIG. 20 illustrates an example attack that may be implemented on a Beacon when a timestamp field is not integrity protected. Specifically, FIG. 19 illustrates an example of a fake Beacon 1902 that an attacker may send in place of a legitimate Beacon 1904. The original timestamp field 1908 may be masked out of Beacon Integrity protection. As shown, the original timestamp field 1908 of the legitimate Beacon 1904 may be altered by the attacker to create a modified timestamp field 1906 in the fake Beacon 1902. The attacker may replay the same Beacon with a modified timestamp field 1906. Because of the modified timestamp field 1906, a STA expects the next Beacon on a time other than TBTT.

For example, FIG. 20 illustrates an example timeline 2002 where an attacker has modified the timestamp field. If the attacker is much closer to the STA (vs the AP-STA) distance or transmitting at a higher power, it can fool the STA to receive a fake Beacon frame 2008. As shown, the Modified timestamp field changes TBTT for the STAs that have processed the earlier fake Beacon frame 2008. The modified timestamp field from previous Beacon frame 2008 fools the STA that the legitimate beacon frames 2004 are expected to be at a later time, where the fake beacon frames 2006 are present. This may lead to disruptions in transmission and reception, and open the STA to further attacks.

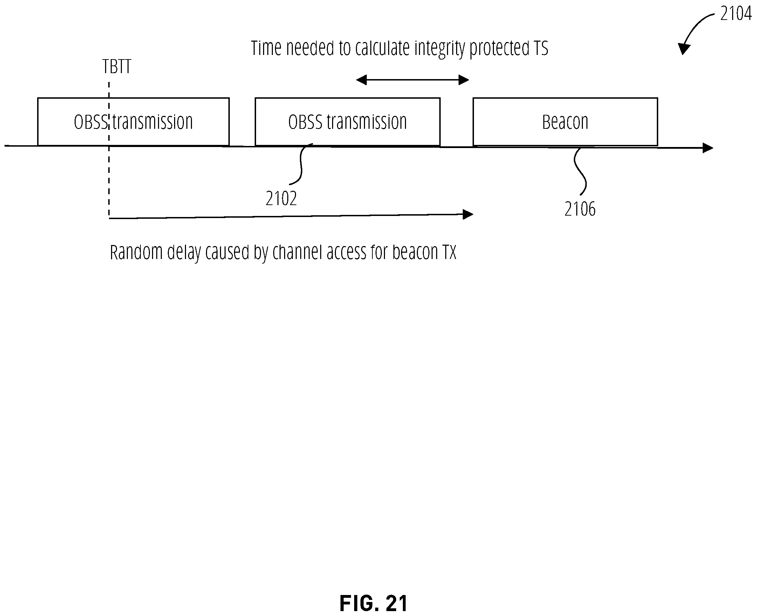

FIG. 21 illustrates an example timeline 2104 for transmission of a Beacon 2106 in accordance with some embodiments. As shown, there may be one or more overlapping basic service set (OBSS) transmissions 2102. The OBSS transmission 2102 may delay the Beacon transmission 2106. Accordingly, there may be a random delay caused by channel access for the Beacon transmission. An AP may not know when it gets a transmission opportunity for the Beacon 2106. The delayed Beacon transmission also changes the time synchronization function (TSF) value which may complicate integrity protection. Due to the delay, a STA may tolerate changes in the timestamp field of a Beacon, making an attack possible.

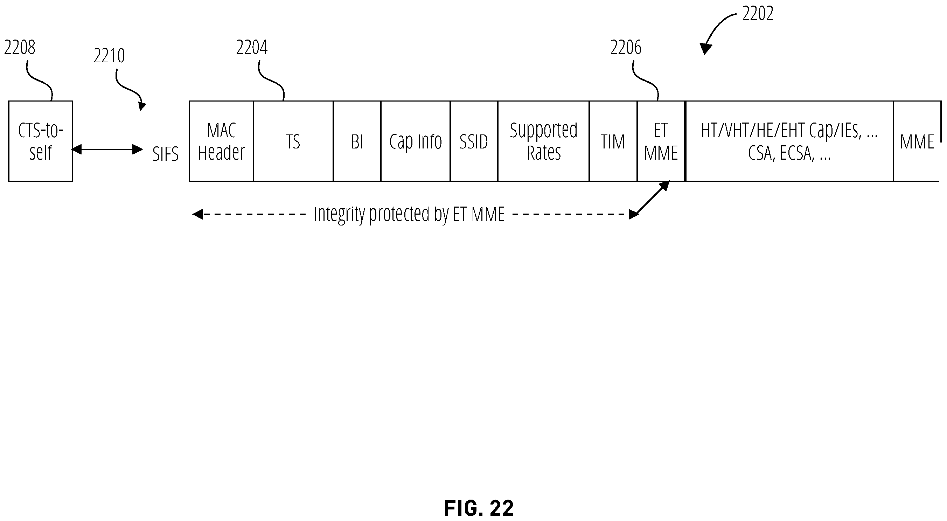

FIG. 22 illustrates an example Beacon frame 2202 with a timestamp field 2204 is integrity protected by an ET MME 2206 in accordance with some embodiments. In some embodiments, the timestamp field 2204 may be added in the MIC calculation of the ET MME 2206. However, not all APs may have sufficient time to include the timestamp field 2204 in the MIC calculation due to hardware limitations without additional enhancements.

In some embodiments, to provide sufficient time to include the timestamp field 2204 in the MIC calculation, the AP may send a frame with a known duration (e.g., Clear to Send (CTS) frame (e.g., CTS-to-self 2208)) before the Beacon frame. Given the duration of the CTS frame and the follow up Short Inter-Frame Space (SIFS) 2210, the AP can project the timestamp value of the Beacon frame (e.g., beginning of Beacon frame) from the timestamp of the CTS frame as follows: TS_{Beacon} = TS_{CTS} + CTS frame duration + SIFS; where TS_{Beacon} is the time of the beginning of the Beacon frame 2202, TS_{CTS} is the timestamp of the CTS frame, the CTS frame has a known duration, given the MCS that is used for MCS transmitted (e.g., 50 microseconds), and the SIFS 2210 is a known duration (e.g., 16 microseconds).

The AP may have an additional multiple 10µs to include the timestamp field 2204 in the MIC calculation because of the CTS frame and the calculation of the timestamp field 2204 using the CTS frame. There may be no new behavior for a (legacy/11bn) STA to receive CTS followed by Beacon frame. An 11bn STA may perform Beacon integrity protection for the ET MME 2206 before a potential Beacon early termination.

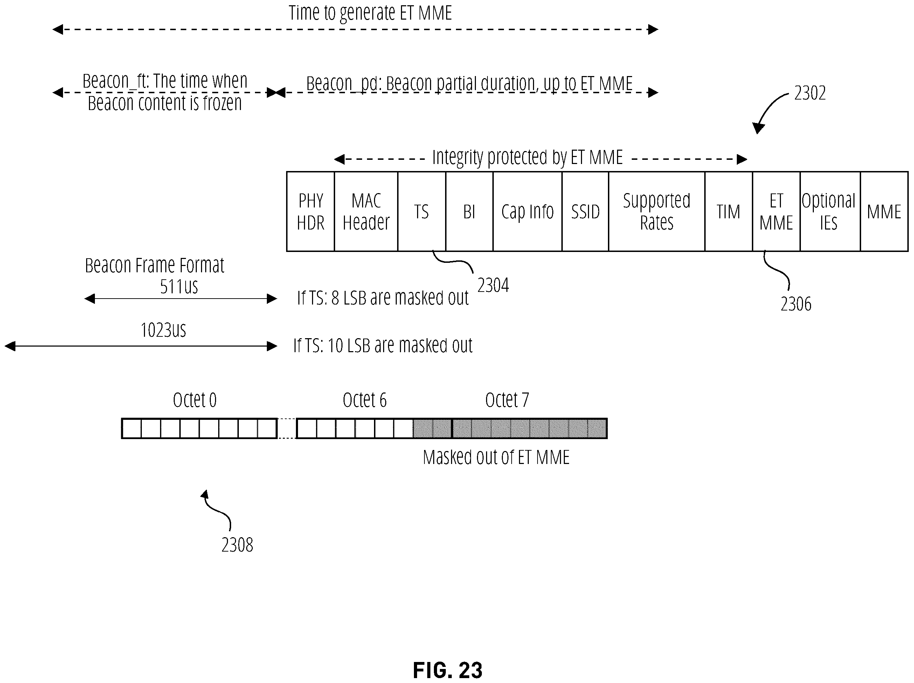

FIG. 23 illustrates an example Beacon frame 2302 where the timestamp field 2304 is integrity protected by the ET MME 2306 by masking out several least significant bits of the timestamp value 2308 from the ET MME 2306 in accordance with some embodiments. For instance, in some embodiments, the AP may mask out B0-8 (e.g., 8 LSB are masked out), by masking out B0-8 there would be additional 511µ time to generate ET MME 2306.in some embodiments, the AP may mask out B0-9 (e.g., 10 LSB are masked out), by masking out B0-9 there would be additional 1023µs time to generate ET MME 2306. In some embodiments, the number of timestamp bits that are masked out could be announced in UHR Capability IE.

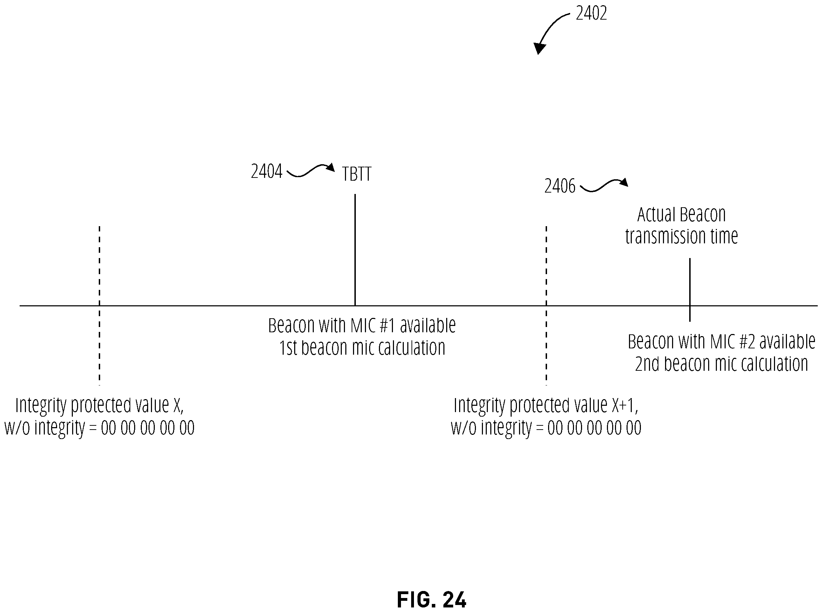

Due to channel unavailability, the Beacon may not be transmitted at the expected time, potentially requiring a redo of ET MME 2306 calculation. FIG. 24 illustrates an example timeline 2402 in which the ET MME calculation is redone. As shown, at the TBTT 2404, a Beacon with a first MIC is available to transmit after performing a first Beacon MIC calculation. However, the channel is unavailable at TBTT 2404 and an actual Beacon transmission time 2406 occurs sometime after. Accordingly a second MIC calculation is performed for the Beacon that takes into account the actual Beacon transmission time.

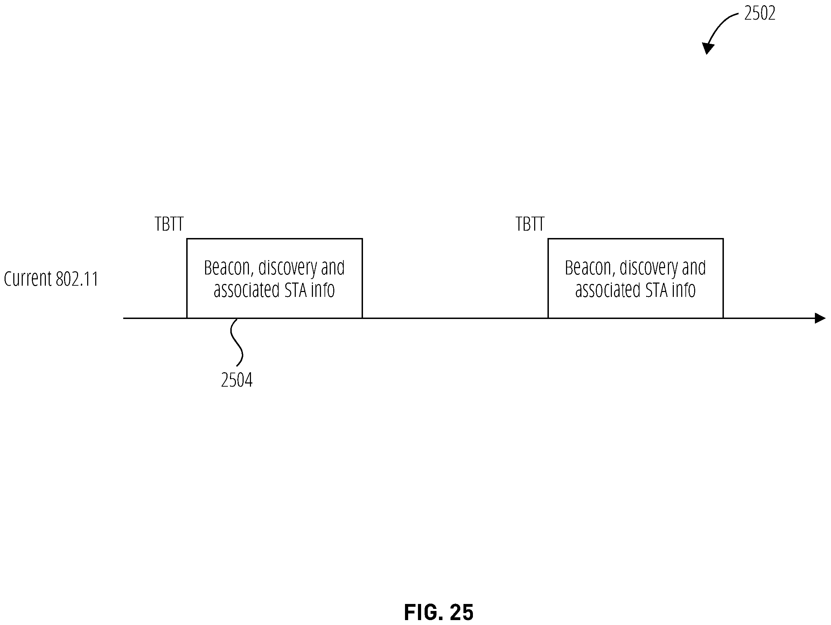

Another inefficiency with current Beacon frames is that the Beacon is used for unassociated and associated STAs resulting in more information than is needed for associated STAs being included in each Beacon. FIG. 25 illustrates a high level example Beacon transmission timeline 2502 under 802.11. Currently Beacon is used for scanning STAs to provide BSS(s) discovery information, and associated STAs to provide information of the buffered frames, BSS time stamp and updated parameters of the BSS. For instance, Beacon frame 2504 includes both discovery and associated STA information.

The scanning information causes Beacon frame 2504 to carry discovery information that is not needed by the associated STAs. This increases associated STAs power consumption. The discovery Beacon may be needed for the legacy STAs that are capable to use only a single Beacon frame type.

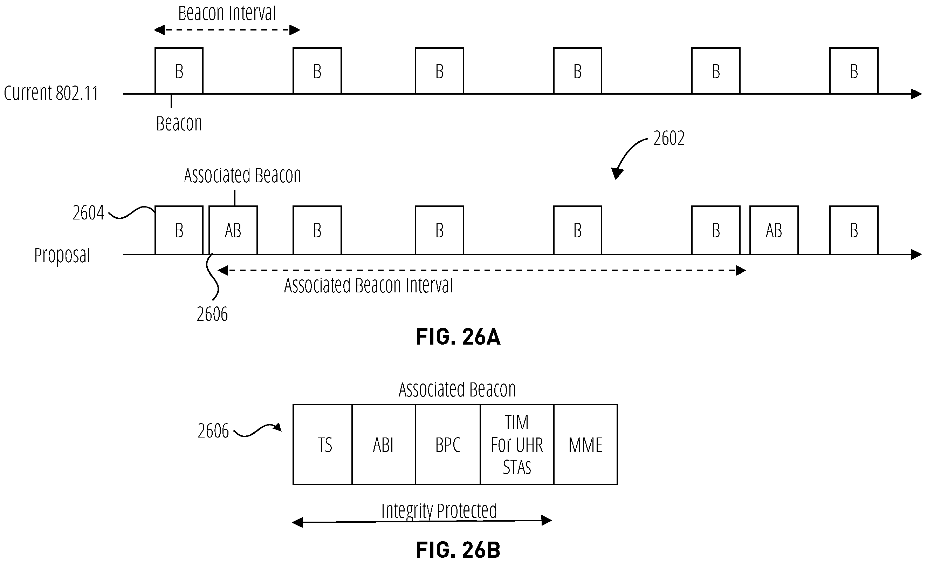

In some embodiments, a new associated Beacon may be introduced. For example, FIG. 26A illustrates an example Beacon transmission timeline 2602 that uses a discovery Beacon 2604 and an associated Beacon 2606. In some embodiments, to minimize associated STAs power consumption, the Beacon frame is split into two separate frames. The discovery Beacon 2604 may have the format and information that is in the current Beacon frame (e.g., both discovery and associated STA information). The associated Beacon 2606 may carry dynamic information for associated STAs.

The discovery Beacon 2604 may serve legacy STAs and scanning STAs. In some embodiments, an associated 802.11bn STAs wakes up to receive the associated Beacon frames and not the discovery Beacon frames. For example, an STA may use the discovery Beacon 2604 evaluate and determine it wants to associate with an AP. Once the STA is associated, it will wake up and receive the associated Beacon 2606 according to the associated Beacon interval. The associated Beacon 2606 and the discovery Beacon 2604 may have separate TBTTs. The value of Associated Beacon Interval (ABI) may be different than Beacon Interval (BI). As shown, the associated Beacon interval may be longer than the interval between discovery Beacon frames.

FIG. 26B illustrates an example format of the associated Beacon 2606 in accordance with some embodiments. The associated Beacon 2606 may be encrypted and contains integrity protected timestamp using an MME. The structure of this MME is the same as the legacy MME, i.e. the MME IE comprises Element ID, Length, Key ID, ABIPN and MIC. However, the content of the individual fields may be different. For instance, a new associated Beacon integrity protected packet number (ABIPN) may be used, and a new key, that is only shared among associated UHR STAs may be used, whose key ID is indicated in the MME. The associated Beacon 2606 may be short and include minimal information to keep STAs associated. As shown, the associated Beacon 2606 may include a timestamp field, an associated Beacon interval field, a BPC field, a TIM field, and an MME. The BPC field may be generated as discussed previously.

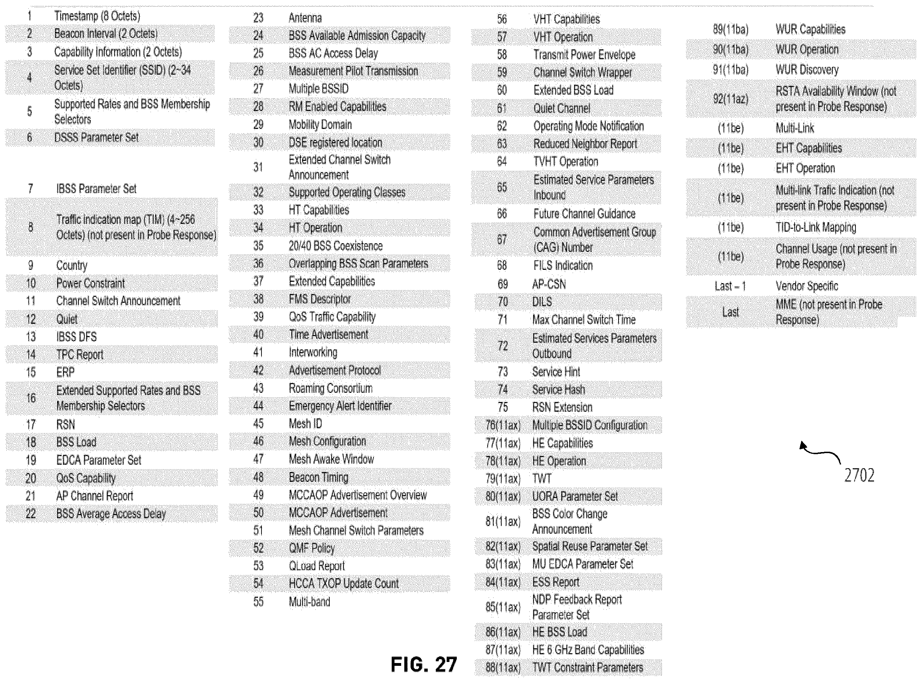

FIG. 27 illustrates an example of various fields 2702 that can be included in a Beacon frame. The many fields shown highlight how much information may be sent in every Beacon that may not be needed by an associated STA thereby wasting STA power. The Beacon frame has become larger and larger with each generation.

The increasing Beacon size leads to Beacon bloating and channel inefficiency. The Beacon getting larger with each WiFi generation; HT/VHT/HE/EHT IEs. Pre-11be generation, Beacon sizes of 300-400B/BSSID were common. 11be IEs could add up to 100-200B (e.g., EHT Capabilities/Operation (27/13B), ML Element (27-113B), ML Traffic indication, TID-to-link Mapping). If no Beacon design change is introduced in 11bn, more IEs may be added to legacy Beacon

Such a bloated beach may consume ~1-3% of medium time (depending on TX rate and #BSS/AP). Some vendors report (legacy) STAs inability to process large Beacon frames. The size may be substantially increased with multiple BSSIDs. For example an AP with 2 BSSIDs in a Beacon may use 880+ bytes, and an AP with 7 BSSIDs in a Beacon may use 1700+ bytes. MultiBSSIDs feature make Beacon and Probe Response more efficient, but if operators include more than a few BSSIDs it may lead to bloating. Embodiments herein may be used to combat the effects of Beacon bloating.

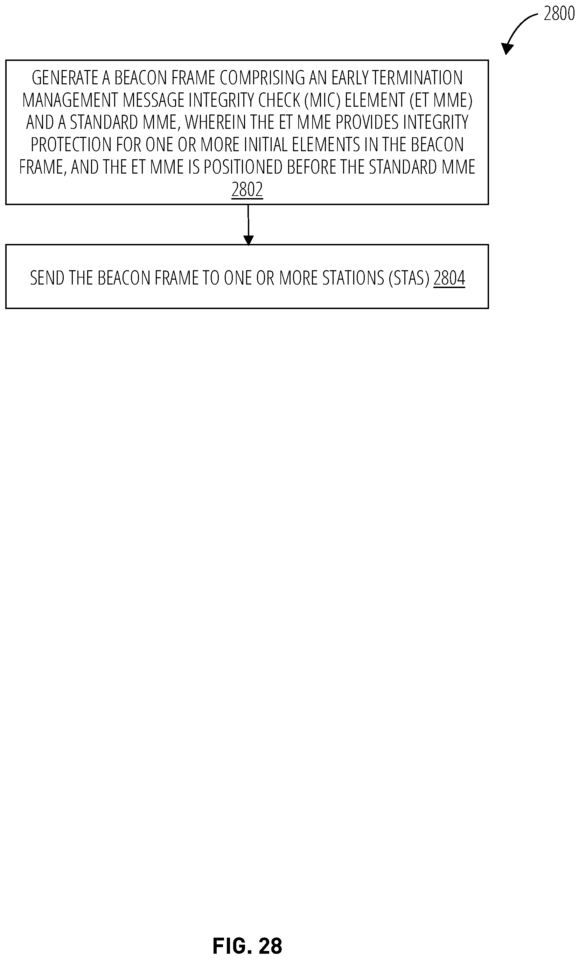

FIG. 28 illustrates an example method 2800 performed by an AP in accordance with some embodiments. The method 2800 includes generating 2802 a Beacon frame comprising an ET MME and a standard MME. The ET MME provides integrity protection for one or more initial elements in the Beacon frame, and the ET MME is positioned before the standard MME. The method 2800 further includes sending 2804, the Beacon frame to one or more STAs.

In some embodiments, the ET MME is positioned after a Traffic Indication Map element, and Beacon early termination is performed after the ET MME.

In some embodiments, the initial elements include a Beacon interval element, a capability information element, a Service Set Identifier element, and a Traffic Indication Map element.

In some embodiments, the MIC is calculated based on a same key as the standard MME, and a nonce that is altered from original nonce of the standard MME, wherein the nonce includes a transmitter address that is increased relative to what is used by the standard MME, or a packet number that is incremented relative to what is used by the standard MME.

In some embodiments, the integrity protection of the ET MME includes Media Access Control (MAC) header protection.

In some embodiments, the method 2800 further comprises generating a basic service set (BSS) parameter change (BPC) element for one or more links that indicates a change in BSS parameters by incrementing a value of the BPC element, wherein the BPC element is included with the ET MME or is positioned prior to the ET MME, wherein the BPC element is a function of a BSS Parameter Change Count (BPCC) of each link of each Basic Service Set Identifier (BSSID).

In some embodiments, the integrity protection of the ET MME includes a timestamp of the Beacon frame.

In some embodiments, the method 2800 further comprises sending a frame with a known duration prior to the Beacon frame, followed with an inter-frame spacing and Beacon frame, and determining the timestamp of the Beacon frame based on the frame.

In some embodiments, the method 2800 further comprises sending a CTS frame prior to the Beacon frame, followed with an inter-frame spacing and Beacon frame, and determining the timestamp of the Beacon frame based on the CTS frame.

In some embodiments, the method 2800 further comprises masking out one or more least significant bits of the timestamp from the ET MME.

In some embodiments, the method 2800 further comprises generating and sending an associated Beacon that includes dynamic information for associated STAs.

In some embodiments, the ET MME is included in a Country information element.

In some embodiments, the ET MME is included in a new element with Element ID equal to 8 or 2.

Embodiments contemplated herein include an apparatus comprising means to perform one or more elements of the method 2800. This apparatus may be, for example, an apparatus of an AP (such as an AP 3118, as described herein).

Embodiments contemplated herein include one or more non-transitory computer-readable media comprising instructions to cause an electronic device, upon execution of the instructions by one or more processors of the electronic device, to perform one or more elements of the method 2800. This non-transitory computer-readable media may be, for example, a memory of an AP (such as a memory 3122 of an AP 3118, as described herein).

Embodiments contemplated herein include an apparatus comprising logic, modules, or circuitry to perform one or more elements of the method 2800. This apparatus may be, for example, an apparatus of an AP (such as an AP 3118, as described herein).

Embodiments contemplated herein include an apparatus comprising: one or more processors and one or more computer-readable media comprising instructions that, when executed by the one or more processors, cause the one or more processors to perform one or more elements of the method 2800. This apparatus may be, for example, an apparatus of an AP (such as an AP 3118, as described herein).

Embodiments contemplated herein include a signal as described in or related to one or more elements of the method 2800.

Embodiments contemplated herein include a computer program or computer program product comprising instructions, wherein execution of the program by a processing element is to cause the processing element to carry out one or more elements of the method 2800. The processor may be a processor of an AP (such as a processor(s) 3120 of an AP 3118, as described herein). These instructions may be, for example, located in the processor and/or on a memory of the AP (such as a memory 3122 of an AP 3118, as described herein).

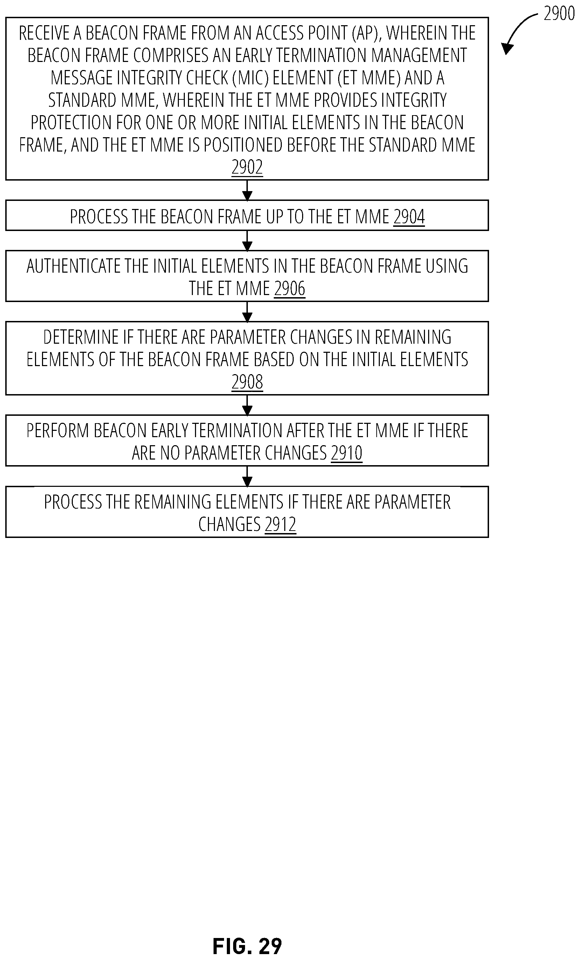

FIG. 29 illustrates an example method 2900 performed by a STA in accordance with some embodiments. The method 2900 includes receiving 2902 a Beacon frame from an AP, wherein the Beacon frame comprises an ET MME and a standard MME. The ET MME may provide integrity protection for one or more initial elements in the Beacon frame, and the ET MME is positioned before the standard MME. The method 2900 further includes processing 2904 the Beacon frame up to the ET MME. The method 2900 further includes authenticating 2906 the initial elements in the Beacon frame using the ET MME. The method 2900 further includes determining 2908 if there are parameter changes in remaining elements of the Beacon frame based on the initial elements. The method 2900 further includes performing 2910 Beacon early termination after the ET MME if there are no parameter changes. In processing 2912, method 2900 processes the remaining elements if there are parameter changes.

In some embodiments, the ET MME is positioned after a Traffic Indication Map element.

In some embodiments, the initial elements include a Beacon interval element, a capability information element, a Service Set Identifier element, and a Traffic Indication Map element.

In some embodiments, the MIC is calculated based on a same key as the standard MME, and a nonce that is altered from original nonce of the standard MME, wherein the nonce includes a transmitter address that is increased relative to what is used by the standard MME, or a packet number that is incremented relative to what is used by the standard MME.

In some embodiments, the integrity protection of the ET MME includes Media Access Control (MAC) header protection.

In some embodiments, the ET MME further comprises a basic service set (BSS) parameter change (BPC) element for one or more links that indicates a change in BSS parameters by incrementing a value of the BPC element, wherein the BPC element is a function of a BSS Parameter Change Count (BPCC) of each link of each Basic Service Set Identifier (BSSID).

In some embodiments, the integrity protection of the ET MME includes a timestamp of the Beacon frame.

In some embodiments, the method 2900 further comprises receiving from the AP an associated Beacon that includes dynamic information.

In some embodiments, the ET MME is included in a Country information element.

In some embodiments, the ET MME is included in a new element with Element ID equal to 8 or 2.

Embodiments contemplated herein include an apparatus comprising means to perform one or more elements of the method 2900. This apparatus may be, for example, an apparatus of a STA (such as STA 3102 as described herein).

Embodiments contemplated herein include one or more non-transitory computer-readable media comprising instructions to cause an electronic device, upon execution of the instructions by one or more processors of the electronic device, to perform one or more elements of the method 2900. This non-transitory computer-readable media may be, for example, a memory of a STA (such as a memory 3106 of an STA 3102, as described herein).

Embodiments contemplated herein include an apparatus comprising logic, modules, or circuitry to perform one or more elements of the method 2900. This apparatus may be, for example, an apparatus of a STA (such as an STA 3102, as described herein).

Embodiments contemplated herein include an apparatus comprising: one or more processors and one or more computer-readable media comprising instructions that, when executed by the one or more processors, cause the one or more processors to perform one or more elements of the method 2900. This apparatus may be, for example, an apparatus of a STA (such as an STA 3102, as described herein).

Embodiments contemplated herein include a signal as described in or related to one or more elements of the method 2900.

Embodiments contemplated herein include a computer program or computer program product comprising instructions, wherein execution of the program by a processor is to cause the processor to carry out one or more elements of the method 2900. The processor may be a processor of a STA (such as a processor(s) 3104 of an STA 3102, as described herein). These instructions may be, for example, located in the processor and/or on a memory of the STA (such as a memory 3106 of an STA 3102, as described herein).

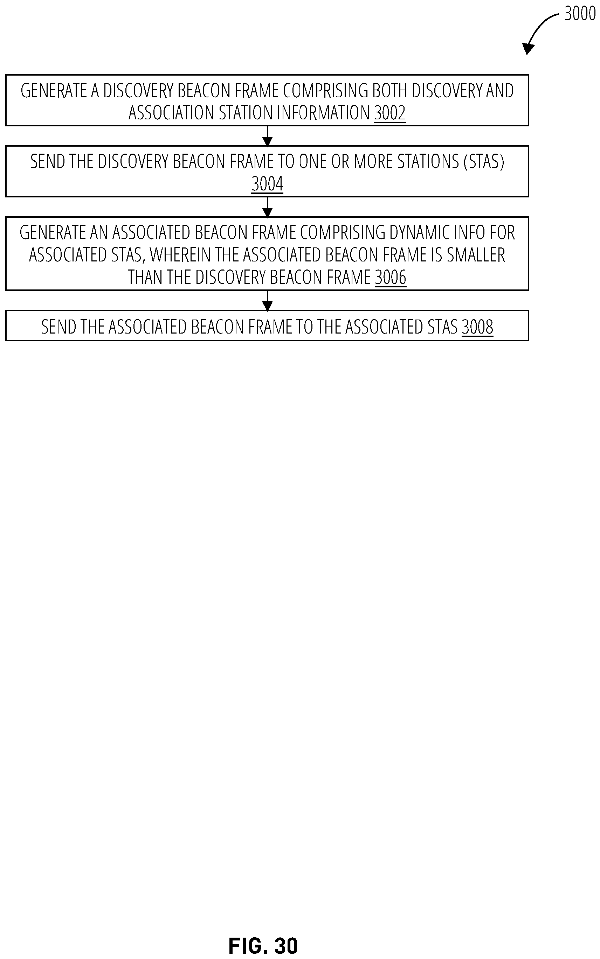

FIG. 30 illustrates a method 3000 performed by an AP in accordance with some embodiments. The method 3000 includes generating 3002 a discovery Beacon frame comprising both discovery and association station information. The method 3000 further includes sending 3004 the discovery Beacon frame to STAs. The method 3000 further includes generating 3006 an associated Beacon frame comprising dynamic info for associated STAs, wherein the associated Beacon frame is smaller than the discovery Beacon frame. The method 3000 further includes sending 3008 the associated Beacon frame to the associated STAs.

In some embodiments, the associated Beacon frame includes a timestamp, an associated Beacon interval, a basic service set (BSS) parameter change (BPC), a Traffic Indication Map for UHR STAs, and a management message integrity check (MIC) element (MME).

In some embodiments, the method 3000 further comprises sending a frame with a known duration prior to the Beacon frame, followed with an inter-frame spacing and Beacon frame, and determining the timestamp of the Beacon frame based on the frame.

In some embodiments, the method 3000 further comprises sending a CTS frame prior to the Beacon frame, followed with an inter-frame spacing and Beacon frame, and determining the timestamp of the Beacon frame based on the CTS frame.

In some embodiments, the method 3000 further comprises masking out one or more least significant bits of the timestamp from the ET MME.

In some embodiments, the method 3000 further comprises generating and sending an associated Beacon that includes dynamic information for associated STAs.

Embodiments contemplated herein include an apparatus comprising means to perform one or more elements of the method 3000. This apparatus may be, for example, an apparatus of an AP (such as an AP 3118, as described herein).

Embodiments contemplated herein include one or more non-transitory computer-readable media comprising instructions to cause an electronic device, upon execution of the instructions by one or more processors of the electronic device, to perform one or more elements of the method 3000. This non-transitory computer-readable media may be, for example, a memory of an AP (such as a memory 3122 of an AP 3118, as described herein).

Embodiments contemplated herein include an apparatus comprising logic, modules, or circuitry to perform one or more elements of the method 3000. This apparatus may be, for example, an apparatus of an AP (such as an AP 3118, as described herein).

Embodiments contemplated herein include an apparatus comprising: one or more processors and one or more computer-readable media comprising instructions that, when executed by the one or more processors, cause the one or more processors to perform one or more elements of the method 3000. This apparatus may be, for example, an apparatus of an AP (such as an AP 3118, as described herein).

Embodiments contemplated herein include a signal as described in or related to one or more elements of the method 3000.

Embodiments contemplated herein include a computer program or computer program product comprising instructions, wherein execution of the program by a processing element is to cause the processing element to carry out one or more elements of the method 3000. The processor may be a processor of an AP (such as a processor(s) 3120 of an AP 3118, as described herein). These instructions may be, for example, located in the processor and/or on a memory of the AP (such as a memory 3122 of an AP 3118, as described herein).

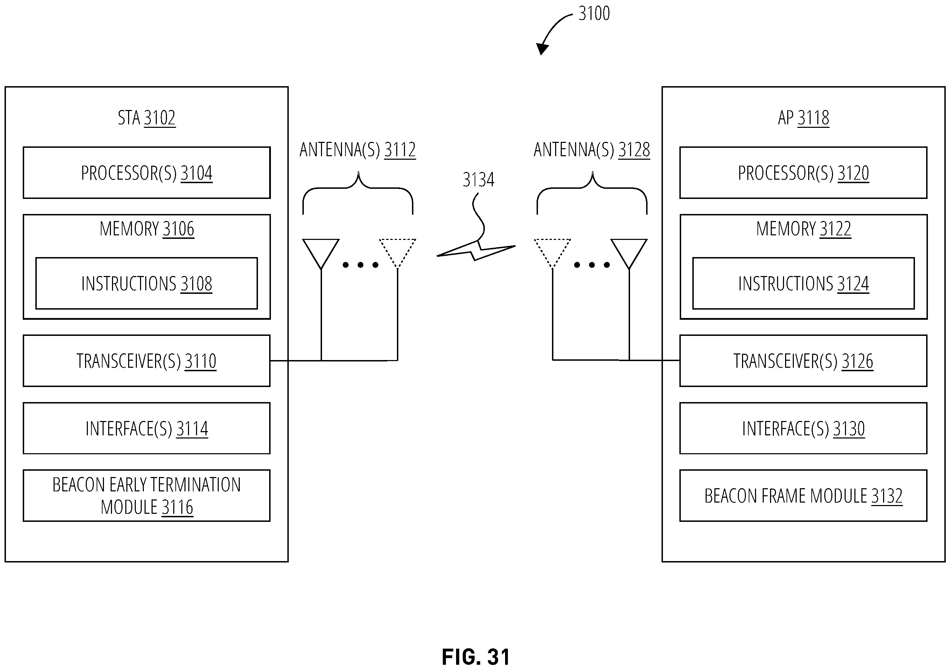

FIG. 31 illustrates a system 3100 for performing signaling 3134 between an STA 3102 and an AP 3118, according to embodiments disclosed herein. The system 3100 may be a portion of a wireless communications system as herein described. The STA 3102 may be, for example, a UE of a wireless communication system. The AP 3118 may be, for example, an access point of a wireless communication system.

The STA 3102 may include one or more processor(s) 3104. The processor(s) 3104 may execute instructions such that various operations of the STA 3102 are performed, as described herein. The processor(s) 3104 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The STA 3102 may include a memory 3106. The memory 3106 may be a non-transitory computer-readable storage medium that stores instructions 3108 (which may include, for example, the instructions being executed by the processor(s) 3104). The instructions 3108 may also be referred to as program code or a computer program. The memory 3106 may also store data used by, and results computed by, the processor(s) 3104.

The STA 3102 may include one or more transceiver(s) 3110 that may include radio frequency (RF) transmitter circuitry and/or receiver circuitry that use the antenna(s) 3112 of the STA 3102 to facilitate signaling (e.g., the signaling 3134) to and/or from the STA 3102 with other devices (e.g., the AP 3118).

The STA 3102 may include one or more antenna(s) 3112 (e.g., one, two, four, or more). For embodiments with multiple antenna(s) 3112, the STA 3102 may leverage the spatial diversity of such multiple antenna(s) 3112 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the STA 3102 may be accomplished according to precoding (or digital beamforming) that is applied at the STA 3102 that multiplexes the data streams across the antenna(s) 3112 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the STA 3102 may implement analog beamforming techniques, whereby phases of the signals sent by the antenna(s) 3112 are relatively adjusted such that the (joint) transmission of the antenna(s) 3112 can be directed (this is sometimes referred to as beam steering).

The STA 3102 may include one or more interface(s) 3114. The interface(s) 3114 may be used to provide input to or output from the STA 3102. For example, an STA 3102 that is a UE may include interface(s) 3114 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 3110/antenna(s) 3112 already described) that allow for communication between the UE and other devices and may operate according to known protocols (e.g., Wi-Fi^{®}, Bluetooth^{®}, and the like).

The STA 3102 may include a Beacon early termination module 3116. The Beacon early termination module 3116 may be implemented via hardware, software, or combinations thereof. For example, the Beacon early termination module 3116 may be implemented as a processor, circuit, and/or instructions 3108 stored in the memory 3106 and executed by the processor(s) 3104. In some examples, the Beacon early termination module 3116 may be integrated within the processor(s) 3104 and/or the transceiver(s) 3110. For example, the Beacon early termination module 3116 may be implemented by a combination of software components (e.g., executed by a DSP or a general processor) and hardware components (e.g., logic gates and circuitry) within the processor(s) 3104 or the transceiver(s) 3110.

The Beacon early termination module 3116 may be used for various aspects of the present disclosure, for example, aspects of FIGS. 1-30. The Beacon early termination module 3116 is configured process the Beacon frame up to the ET MME, authenticate the initial elements in the Beacon frame using the ET MME, determine if there are parameter changes in remaining elements of the Beacon frame based on the initial elements, and perform Beacon early termination after the ET MME if there are no parameter changes or process the remaining elements if there are parameter changes.

The AP 3118 may include one or more processor(s) 3120. The processor(s) 3120 may execute instructions such that various operations of the AP 3118 are performed, as described herein. The processor(s) 3120 may include one or more baseband processors implemented using, for example, a CPU, a DSP, an ASIC, a controller, an FPGA device, another hardware device, a firmware device, or any combination thereof configured to perform the operations described herein.

The AP 3118 may include a memory 3122. The memory 3122 may be a non-transitory computer-readable storage medium that stores instructions 3124 (which may include, for example, the instructions being executed by the processor(s) 3120). The instructions 3124 may also be referred to as program code or a computer program. The memory 3122 may also store data used by, and results computed by, the processor(s) 3120.

The AP 3118 may include one or more transceiver(s) 3126 that may include RF transmitter circuitry and/or receiver circuitry that use the antenna(s) 3128 of the AP 3118 to facilitate signaling (e.g., the signaling 3134) to and/or from the AP 3118 with other devices (e.g., the STA 3102).

The AP 3118 may include one or more antenna(s) 3128 (e.g., one, two, four, or more). In embodiments having multiple antenna(s) 3128, the AP 3118 may perform MIMO, digital beamforming, analog beamforming, beam steering, etc., as has been described.

The AP 3118 may include one or more interface(s) 3130. The interface(s) 3130 may be used to provide input to or output from the AP 3118. For example, an AP 3118 that is a base station may include interface(s) 3130 made up of transmitters, receivers, and other circuitry (e.g., other than the transceiver(s) 3126/antenna(s) 3128 already described) that enables the base station to communicate with other equipment in a core network, and/or that enables the base station to communicate with external networks, computers, databases, and the like for purposes of operations, administration, and maintenance of the base station or other equipment operably connected thereto.

The AP 3118 may include a Beacon frame module 3132. The Beacon frame module 3132 may be implemented via hardware, software, or combinations thereof. For example, the Beacon frame module 3132 may be implemented as a processor, circuit, and/or instructions 3124 stored in the memory 3122 and executed by the processor(s) 3120. In some examples, the Beacon frame module 3132 may be integrated within the processor(s) 3120 and/or the transceiver(s) 3126. For example, the Beacon frame module 3132 may be implemented by a combination of software components (e.g., executed by a DSP or a general processor) and hardware components (e.g., logic gates and circuitry) within the processor(s) 3120 or the transceiver(s) 3126.

The Beacon frame module 3132 may be used for various aspects of the present disclosure, for example, aspects of FIGS. 1-30. The Beacon frame module 3132 is configured to generate the Beacon frame module including the ET MME.

For one or more embodiments, at least one of the components set forth in one or more of the preceding figures may be configured to perform one or more operations, techniques, processes, and/or methods as set forth herein. For example, a processor as described herein in connection with one or more of the preceding figures may be configured to operate in accordance with one or more of the examples set forth herein. For another example, circuitry associated with a STA or AP as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.
Aspects of the invention are disclosed in the following numbered clauses:
1. A method performed by an access point (AP), the method comprising:
   generating a Beacon frame comprising an early termination management message integrity check (MIC) element (ET MME) and a standard MME,
   wherein the ET MME provides integrity protection for one or more initial elements in the Beacon frame, and the ET MME is positioned before the standard MME; and
   sending the Beacon frame to one or more stations (STAs).
2. The method of clause 1, wherein the ET MME is positioned after a Traffic Indication Map element, and Beacon early termination is performed after the ET MME.
3. The method of clause 1 or clause 2, wherein the initial elements include a Beacon interval element, a capability information element, a Service Set Identifier element, and a Traffic Indication Map element.
4. The method of any preceding clause, wherein the MIC is calculated based on a same key as the standard MME, and a nonce that is altered from original nonce of the standard MME, wherein the nonce includes a transmitter address that is increased relative to what is used by the standard MME, or a packet number that is incremented relative to what is used by the standard MME.
5. The method of any preceding clause, wherein the integrity protection of the ET MME includes Media Access Control (MAC) header protection.
6. The method of any preceding clause, further comprising generating a basic service set (BSS) parameter change (BPC) element for one or more links that indicates a change in BSS parameters by incrementing a value of the BPC element, wherein the BPC element is included with the ET MME or is positioned prior to the ET MME, wherein the BPC element is a function of a BSS Parameter Change Count (BPCC) of each link of each Basic Service Set Identifier (BSSID).
7. The method of any preceding clause, wherein the integrity protection of the ET MME includes a timestamp of the Beacon frame.
8. The method of clause 7, further comprising sending a frame with a known duration prior to the Beacon frame, followed with an inter-frame spacing and Beacon frame, and determining the timestamp of the Beacon frame based on the frame.
9. The method of clause 7 or clause 8, further comprising sending a clear-to-send (CTS) frame prior to the Beacon frame, followed with an inter-frame spacing and Beacon frame, and determining the timestamp of the Beacon frame based on the CTS frame.
10. The method of any of clauses 7 to 9, further comprising masking out one or more least significant bits of the timestamp from the ET MME.
11. The method of any preceding clause, further comprising generating and sending an associated Beacon that includes dynamic information for associated STAs.
12. The method of any preceding clause, wherein the ET MME is included in a Country information element.
13. The method of any preceding clause, wherein the ET MME is included in a new element with Element ID equal to 8 or 2.
14. A method performed by a station (STA), the method comprising:
   receiving a Beacon frame from an access point (AP), wherein the Beacon frame comprises an early termination management message integrity check (MIC) element (ET MME) and a standard MME, wherein the ET MME provides integrity protection for one or more initial elements in the Beacon frame, and the ET MME is positioned before the standard MME;
   processing the Beacon frame up to the ET MME;
   authenticating the initial elements in the Beacon frame using the ET MME;
   determining if there are parameter changes in remaining elements of the Beacon frame based on the initial elements;
   performing Beacon early termination after the ET MME if there are no parameter changes; and
   processing the remaining elements if there are parameter changes.
15. The method of clause 14, wherein the ET MME is positioned after a Traffic Indication Map element.
16. The method of clause 14 or clause 15, wherein the initial elements include a Beacon interval element, a capability information element, a Service Set Identifier element, and a Traffic Indication Map element.
17. The method of any of clauses 14 to 16, wherein the MIC is calculated based on a same key as the standard MME, and a nonce that is altered from original nonce of the standard MME, wherein the nonce includes a transmitter address that is increased relative to what is used by the standard MME, or a packet number that is incremented relative to what is used by the standard MME.
18. The method of any of clauses 14 to 17, wherein the integrity protection of the ET MME includes Media Access Control (MAC) header protection.
19. The method of any of clauses 14 to 18, wherein the ET MME further comprises a basic service set (BSS) parameter change (BPC) element for one or more links that indicates a change in BSS parameters by incrementing a value of the BPC element, wherein the BPC element is a function of a BSS Parameter Change Count (BPCC) of each link of each Basic Service Set Identifier (BSSID).
20. The method of any of clauses 14 to 19, wherein the integrity protection of the ET MME includes a timestamp of the Beacon frame.
21. The method of clause 20, further comprising receiving from the AP an associated Beacon that includes dynamic information.
22. The method of clause 20 or clause 21, The method of clause 1, wherein the ET MME is included in a Country information element.
23. The method of any of clauses 20 to 22, wherein the ET MME is included in a new element with Element ID equal to 8 or 2.
24. A method performed by an access point (AP), the method comprising:
   generating a discovery Beacon frame comprising both discovery and association station information;
   sending the discovery Beacon frame to one or more stations (STAs);
   generating an associated Beacon frame comprising dynamic info for associated STAs, wherein the associated Beacon frame is smaller than the discovery Beacon frame; and
   sending the associated Beacon frame to the associated STAs.
25. The method of clause 24, wherein the associated Beacon frame includes a timestamp, an associated Beacon interval, a basic service set (BSS) parameter change (BPC), a Traffic Indication Map for UHR STAs, and a management message integrity check (MIC) element (MME).
26. An apparatus comprising means to perform the method of any of clauses 1 to 25.
27. A computer-readable media comprising instructions to cause an electronic device, upon execution of the instructions by one or more processors of the electronic device, to perform the method of any of clauses 1 to 25.
28. An apparatus comprising logic, modules, or circuitry to perform the method of any of clauses 1 to 25.
29. A method comprising one or more operations corresponding to a software enabled access point (Soft-AP), as disclosed herein.
30. A method comprising one or more operations corresponding to a station (STA), as disclosed herein.
31. A device configured to interact with a software enabled access point (Soft-AP) in accordance with one or more operations disclosed herein.
32. A device configured to interact with a station (STA) in accordance with one or more operations disclosed herein.

## Claims

1. A method performed by an access point, AP, the method comprising:
generating a Beacon frame comprising an early termination management message integrity check, MIC, element, ET MME, and a standard MME,
wherein the ET MME provides integrity protection for one or more initial elements in the Beacon frame, and the ET MME is positioned before the standard MME; and
sending the Beacon frame to one or more stations, STAs.

2. The method of claim 1, wherein the ET MME is positioned after a Traffic Indication Map element, and Beacon early termination is performed after the ET MME.

3. The method of claim 1 or claim 2, wherein the initial elements include a Beacon interval element, a capability information element, a Service Set Identifier element, and a Traffic Indication Map element.

4. The method of any preceding claim, wherein the MIC is calculated based on a same key as the standard MME, and a nonce that is altered from original nonce of the standard MME, wherein the nonce includes a transmitter address that is increased relative to what is used by the standard MME, or a packet number that is incremented relative to what is used by the standard MME.

5. The method of any preceding claim, wherein the integrity protection of the ET MME includes Media Access Control, MAC, header protection.

6. The method of any preceding claim, further comprising generating a basic service set, BSS, parameter change, BPC, element for one or more links that indicates a change in BSS parameters by incrementing a value of the BPC element, wherein the BPC element is included with the ET MME or is positioned prior to the ET MME, wherein the BPC element is a function of a BSS Parameter Change Count, BPCC, of each link of each Basic Service Set Identifier, BSSID.

7. The method of any preceding claim, wherein the integrity protection of the ET MME includes a timestamp of the Beacon frame.

8. The method of claim 7, further comprising sending a frame with a known duration prior to the Beacon frame, followed with an inter-frame spacing and Beacon frame, and determining the timestamp of the Beacon frame based on the frame.

9. The method of claim 7 or claim 8, further comprising sending a clear-to-send, CTS, frame prior to the Beacon frame, followed with an inter-frame spacing and Beacon frame, and determining the timestamp of the Beacon frame based on the CTS frame.

10. The method of any of claims 7 to 9, further comprising masking out one or more least significant bits of the timestamp from the ET MME.

11. The method of any preceding claim, further comprising generating and sending an associated Beacon that includes dynamic information for associated STAs.

12. The method of any preceding claim, wherein the ET MME is included in a Country information element; or wherein the ET MME is included in a new element with Element ID equal to 8 or 2.

13. A method performed by a station, STA, the method comprising:
receiving a Beacon frame from an access point, AP, wherein the Beacon frame comprises an early termination management message integrity check, MIC element, ET MME and a standard MME, wherein the ET MME provides integrity protection for one or more initial elements in the Beacon frame, and the ET MME is positioned before the standard MME;
processing the Beacon frame up to the ET MME;
authenticating the initial elements in the Beacon frame using the ET MME;
determining if there are parameter changes in remaining elements of the Beacon frame based on the initial elements;
performing Beacon early termination after the ET MME if there are no parameter changes; and
processing the remaining elements if there are parameter changes.

14. An apparatus comprising means to perform the method of any of claims 1 to 13.

15. A computer-readable media comprising instructions to cause an electronic device, upon execution of the instructions by one or more processors of the electronic device, to perform the method of any of claims 1 to 13.
